(19)

Europäisches Patentamt
European Patent Office
Office européen des brevets

(11) **EP 2 657 647 A1**

(12) **EUROPEAN PATENT APPLICATION**

(43) Date of publication:
**30.10.2013 Bulletin 2013/44**

(21) Application number: **12165120.2**

(22) Date of filing: **23.04.2012**

(51) Int Cl.:
***G01C 17/28*** *(2006.01)*    ***G01C 21/16*** *(2006.01)*
***G01C 21/20*** *(2006.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicants:
• **Deutsches Zentrum für Luft- und Raumfahrt e.V.
51147 Köln (DE)**
• **Consejo Superior de Investigaciones Cientificas
(CSIC)
28500 Arganda del Rey (Madrid) (ES)**

(72) Inventors:
• **Khider, Mohammed**
  **D-82205 Gilching (DE)**
• **Robertson, Patrick Dr.**
  **D-82541 Ammerland (DE)**
• **Zampella, Francisco**
  **ES-28500 Arganda del Rey (Madrid) (ES)**
• **Jiménes Ruiz, Antonio Ramón**
  **ES-28500 Arganda del Rey (Madrid) (ES)**

(74) Representative: **von Kreisler Selting Werner
Deichmannhaus am Dom
Bahnhofsvorplatz 1
50667 Köln (DE)**

(54) **Method for estimating the position and orientation using an inertial measurement unit fixed to a moving pedestrian**

(57)    The method is for estimating the position and orientation using an inertial measurement unit fixed to a moving pedestrian, in particular to a leg, a knee, a foot, or an arm of a pedestrian, for detecting movement of the pedestrian within an observation area in particular not being covered by GNSS-signals as e.g. in buildings. The method comprises the following steps assuming a known sensor alignment on the pedestrian:
- receiving measurements values from the inertial measurement unit and determining the orientation of the pedestrian within the observation area,
- providing a magnetic field sensor fixed to the pedestrian,
for sensing at least the direction of the local magnetic field at the respective site within the observation area where the pedestrian currently is present,
- determining the orientation of the pedestrian within the observation area based on the direction of the local magnetic field sensed by the magnetic field sensor, and
- adjusting orientation estimated by the inertial measurement unit in accordance with the information obtained from the discrepancies between the change in orientation provided by the inertial measurement unit and the change in orientation of the pedestrian observed from the local magnetic field, sensed by the magnetic field sensor.

Fig.3

**Description**

The present invention relates to a method for estimating the position and orientation using an inertial measurement unit fixed to a moving pedestrian. In particular, the present invention relates to an estimation of the gyroscope bias using the magnetic field variation during stance phases in pedestrian dead-reckoning.

## 1. Introduction and Background Theory

Outdoors, the Global Navigation Satellite Systems provide absolute positioning, but indoors or in the lack of enough satellites in sight, the use of Inertial Measurement Units (IMUs) have become an excellent asset to estimate the track of the position of a user (person, car, plane, etc) for some time. In the absence of satellite signals the IMU provides Dead-Reckoning information of the position, but because of the nature of the inertial integration an increasing positioning and orientation error will appear due to the bias, noise and non linearity of the measurements.

Up to some years ago the use of IMUs was limited to big electromechanical units, but the recent advances in Micro Electro Mechanical (MEM) technology have allowed the development of small Inertial Measurement Units (IMU) with low cost and an adequate noise characteristic. This has permitted the integration of these units in handheld devices, intelligent phones and many other devices mainly as motion detection sensors, and has created the field of Pedestrian Dead-Reckoning (PDR) where an IMU mounted in the body is used to obtain the position. The IMU is usually located in the foot, but can also be placed in the hip, knee, etc.

There have been many PDR implementations that fuse inertial measurements with other measurements, among them [8] uses an Extended Kalman Filter (EKF) to estimate the position and attitude errors. The method in [8] establish movement constrains as a way to detect and eliminate the measurement errors generated by the use of Dead-Reckoning and therefore limiting the increment of the error. The most common approach when the IMU is located in the foot is to use Zero velocity UPdaTe (ZUPT) [6], which uses the fact that during a stance phase the foot is at a zero velocity state that can be detected observing the accelerations and turn rates. The ZUPT provides information about the velocities, the roll and the pitch.

Another common approach is to use the Zero Angular Rate Update (ZARU) which estates that during a still phase (the person is still and not moving at all) the IMU orientation is constant and therefore the turn rates measured in the Gyroscope are the measurement biases. The ZARU improves significantly the performance of the Gyro but requires an initialization phase that many times is not possible.

The main source of error after applying ZUPT and ZARU is the loss of heading (an unobserved state), that after some time can generate significant errors in the positioning. Many researchers have evaluated the use of the magnetic field sensor available in many IMU sensors to obtain information of the heading. Outdoors, the magnetic field and the gravity provides complete orientation information, but indoor, the presence of disturbances can generate strong errors in the integrated position.

## 2. Problem Statement

The loss of the heading represents a strong source of error during a PDR mechanization. Indoors, the presence of magnetic disturbances prevents the use of the Earth magnetic field as an absolute heading reference. Using ZARUs help to reduce the heading drift but in situations where there is no initialization or when the stance is too short or unstable for a ZARU (e.g. fast walking, running, crawling) a complementary bias estimation method should be implemented.

## 3. State of the Art

Some authors like [8] and [12] have shown that the direct use of the Magnetometer (a sensor commonly included in the IMU) in buildings with low magnetic disturbances can improve the performance of a PDR method. However, in most circumstances the magnetic information is inaccurate. In [1] a detector of the quality of the measurement is implemented, so as to reject the compass-based orientations which are classified as not reliable, but discarding bad measurements might lead to not having any heading information at all.

In [2] and [3] the mathematical dependance between the turn rates and the changes in the magnetic field, using an EKF is studied as a way to mitigate the magnetic disturbances and for attitude determination. Other attitude aiding or heading drift correction techniques include the use of cameras [11], fusion with Local Positioning Systems (LPS) such as those based on RF (WiFi [5], UWB [4], RFID [9]), or map-matching [10], but they would require additional external hardware or databases.

## 4. Problems in the State of the Art

The lack of information about the yaw (heading) generates the necessity of using the Earth magnetic field as a reference, but in the presence of magnetic disturbances this reference - if used for a global heading - may produce even worse errors. The propagation of the attitude and the relationship with the change in the magnetic field is a non linear problem and this may produce an error in the propagation when using linearized methods (like the EKF approach proposed in [2] and [3]), so it would be useful to explore other estimation methods.

## 5. Summary of the Invention / Novel Approach

We propose the use of the relationship (non linear) between the change in the magnetic field and the turn rates to create an additional measurement to better determine the attitude and the Gyroscope biases. In the case of a human-mounted and, especially a foot-mounted IMU, the sensor can pass through different magnetic perturbations that will alter the magnetic field and might be confused with changes in the orientation.

In one aspect of the invention, it is proposed for a human-mounted and, in particular, a foot-mounted IMU, to relate the change in the magnetic field during the stance phase with the turn rate measurements of the sensor, in particular when assuming that the disturbances remain constant for short durations (e.g. between two cycles at 100 Hz sensor sampling rate). This way the magnetic disturbances are constant and using the change of the magnetic field will provide additional information of the real turn rates during this short duration. We will call this method Magnetic Angular Rate Update (MARU). This method can also be implemented for an IMU fixed in other parts of the body (knee, waist, leg, arm, etc.) or during the swing phase of the foot while walking, allthough it will imply a higher covariance of the measurement.

In this invention several methods are included to implement the MARU and propose the use of the Unscented Kalman Filter (UKF) [14] as a way to improve the behavior of other filters like the EKF in highly non-linear attitude propagation and measurement models.

According to the most general aspect of the invention, there is provided a method for estimating the position and orientation using an inertial measurement unit fixed to a moving pedestrian, in particular to a leg, a knee, a foot, or an arm of a pedestrian, for detecting movement of the pedestrian within an observation area in particular not being covered by GNSS-signals as e.g. in buildings, comprising the following steps assuming a known sensor alignment on the pedestrian:

- receiving measurements values from the inertial measurement unit and determining the orientation of the pedestrian within the observation area,
- providing a magnetic field sensor fixed to the pedestrian, for sensing at least the direction of the local magnetic field at the respective site within the observation area where the pedestrian currently is present,
- determining the orientation of the pedestrian within the observation area based on the direction of the local magnetic field sensed by the magnetic field sensor, and
- adjusting orientation estimated by the inertial measurement unit in accordance with the information obtained from the discrepancies between the change in orientation provided by the inertial measurement unit and the change in orientation of the pedestrian observed from the local magnetic field, sensed by the magnetic field sensor.

In one aspect of the present invention, a time interval or a limited region is identified within which the sensed direction of the local magnetic field is substantially left unchanged, wherein, for the time interval or the limited region, the potential change in orientation of the pedestrian is determined based on the direction of the local magnetic field sensed by the magnetic field sensor and wherein orientation estimated by the inertial measurement unit is adjusted in accordance with the discrepancies in the perceived orientation of the pedestrian determined based on the difference between the change in the direction of the local magnetic field sensed by the magnetic field sensor and the change in orientation sensed by the inertial measurement unit.

According to another aspect of the present invention, the magnetic field sensor and the inertial measurement unit provide a pseudo measurement inputted into a Kalman filter also receiving the measurement values of the inertial measurement unit, wherein the Kalman filter outputs the respective current orientation of the pedestrian within the observation area.

The limited time interval may be the stance phase for an inertial measurement unit that may be located on the foot.

The limited time interval may be during the swing phase for an inertial measurement unit that may be located on the foot.

Typically, the magnetic field sensor measures the vector of the local magnetic field, i.e. the direction of the local magnetic field at least in the horizontal projection and/or the strength of the local magnetic field.

In a specific embodiment of the present invention, the inertial measurement unit comprises at least a 3-axis gyroscope or other turn rate sensor and a 3-axis accelerometer, wherein the orientation estimated by the at least one turn rate sensor is adjusted in accordance with the information obtained from the discrepancies between the change in orientation provided by the at least one turn rate sensor and the change in orientation of the pedestrian observed from the local magnetic field, sensed by the magnetic field sensor.

The method of the present invention can be used in a method for localizing a pedestrian within the observation area based on the outputs of the inertial measurement unit.

## 5.1 Background Theory

As an introduction the theory behind the invention is presented hereinbelow referring to the drawing in which

Fig. 1       shows the change in the measured magnetic field vector due to a rotation, represented in the sensor's reference frame,

Fig. 2       shows the change in the magnetic heading due to the turn rates observed in $B_n$ in the modified navigation frame (estimated horizontal plane),

Fig. 3       shows the structure of a PDR algorithm in an UKF with ZUPT and MARU,

Fig. 4       shows the change in the measured magnetic field vector $B_b$ due to a rotation, represented in the sensor's reference frame wherein $\omega\Delta t \times B$ represents the first order approximation of the increment,

Fig. 5       shows an analysis of the height (a), orientation (b) and step length (c) errors for the data set 14 of [17],

Fig. 6       shows the evolution of the root mean squared errors in the position (a) and yaw (b) versus time. MARU1 refers to the change in the magnetic heading and MARU2 refers to the magnetic rotation. EKF MARU uses the linear approximation of the magnetic rotation,

Fig. 7       shows the acceleration, turn rate (amplified) and results of 2 stance detection methods used during normal walk (a), walk and detention (b) and fast walk/running (c), data obtained from data set 15 of [17],

Fig. 8       shows the acceleration, turn rate (amplified), stance detection, veracity and attenuation to the measure covariance during normal walk (a), walk and detention (b) and fast walk/running (c), data obtained from data set 15 of [17],

Fig. 9       shows an analysis of the height (a), orientation (b) and step length (c) errors for the data set 16 of [17] with several algorithms, with and without soft decisions. MARU1 refers to the change in the  magnetic heading and MARU2 refers to the magnetic rotation. EKF MARU uses the linear approximation of the magnetic rotation,

Fig. 10     shows several estimated trajectories for a PDR reconstruction of a walk in the first floor of an office building. MARU uses the magnetic rotation approach, and

Fig. 11     shows several estimated trajectories for a PDR reconstruction of a walk in the A building of the Centre for Automation and Robotics. MARU refers to the change in the magnetic heading.

### 5.1.1 Attitude Propagation

The attitude is usually presented in 3 ways, as Euler angles (in our case roll, pitch and yaw), as a Direction Cosine Matrix $C_b^n$ that rotates any vector from the body frame to the navigation frame or as a quaternion. It is possible to convert between any of those representations according to [13]. In this work we will use the Direction Cosine Matrix to propagate the attitude, and the Euler angles to estimate the orientation with the UKF.

To propagate $C_b^n$, the rotations $\omega$ (angular rate) obtained during a time interval $\Delta t$ from the Gyroscope are used as:

$$C_b^n(k) = C_b^n(k-1) \cdot e^{\Omega_{nb}^b(k) \cdot \Delta t}, \qquad (1)$$

where $k$ is the current sample, $k$ - 1 the previous sample and $\Omega_{nb}^b(k)$ is:

$$\Omega_{nb}^b(k) = [\omega(k) \quad \times] = \begin{bmatrix} 0 & -\omega_z(k) & \omega_y(k) \\ \omega_z(k) & 0 & -\omega_x(k) \\ -\omega_y(k) & \omega_x(k) & 0 \end{bmatrix}. \qquad (2)$$

To calculate $e^{\Omega_{nb}^b \cdot \Delta t}$ we used the decomposition proposed in [13] that reorder the Taylor series of the exponential of a skewsymmetrical matrix as sinusoidal functions:

$$e^{\Omega_{nb}^b \cdot \Delta t} = I + \frac{\sin(\|\omega \Delta t\|)}{\|\omega\|} \Omega_{nb}^b + \frac{(1 - \cos(\|\omega \Delta t\|))}{\|\omega\|^2} \Omega_{nb}^{b\,2}. \qquad (3)$$

### 5.1.2 Extended Kalman Filter

The Extended Kalman Filter is based on the first order approximation of the transition and observation functions of a given system. The linearized transition model of the estimated errors of the states $\Delta \overline{X}(k)$ and the estimated covariance $\overline{P}(k)$ is:

$$\Delta \overline{X}(k) = \Phi(k-1) \cdot \Delta X(k-1) + w(k-1), \qquad (4)$$

$$\overline{P}(k) = \Phi(k-1) \cdot P(k-1) \cdot \Phi^T(k-1) + Q(k-1), \qquad (5)$$

where $w(k)$ is the additive noise model of the process with covariance $Q(k)$, and $\Phi(k)$ is the Jacobian of the transition function. If a measurement is available, the linearized observation model is:

$$z(k) = H(k) \cdot \Delta X(k) + n(k) \qquad (6)$$

where $n(k)$ is the additive noise model of the measurement with covariance $R(k)$, and H(k) is the Jacobian of the observation function.

The updates of the states and covariances in the case of a measurement are as follows:

$$\Delta X(k) = \Delta \overline{X}(k) + K(k) \cdot (m(k) - H \cdot \overline{X}(k)), \qquad (7)$$

$$P(k) = (I - K(k) \cdot H(k)) \cdot \overline{P}(k) \cdot (I - K(k) \cdot H(k))^T + R(k), \qquad (8)$$

where $K(k)$ is the Kalman Gain. A value for $K(k)$ that minimize the state covariance $P(k)$ is calculated as:

$$K(k) = \overline{P}(k) \cdot H^T(k) \cdot (H(k) \cdot \overline{P}(k) \cdot H^T(k) + R(k))^{-1}. \qquad (9)$$

### 5.1.3 Unscented Kalman Filter

Unlike the EKF, the UKF measures the behavior of the transition and observation functions using several symmetrical "sigma" points around the mean of the states $\overline{x}_{k-1}$. The "sigma" points are established as in [7]:

$$X_{k-1,i} = \begin{cases} \overline{x}_{k-1} & i = 0 \\ \overline{x}_{k-1} + (\sqrt{(n+\lambda)P_{k-1}})_i & i = 1,...,n \\ \overline{x}_{k-1} - (\sqrt{(n+\lambda)P_{k-1}})_{i-n} & i = n+1,...,2 \cdot n \end{cases}, \qquad (10)$$

where $(\sqrt{(n+\lambda)P_{k-1}})_i$ represents the column i of the matrix squared root of the weighted covariance $P_{k-1}$ and it can be obtained using the eigen decomposition. $n$ is the number of states and $\lambda = \alpha^2(n+\kappa)-n$ is a scale factor where $\alpha$ and $\kappa$ change the dispersion of the points.

Each $X_{k-1,i}$ point is propagated using the function $f(x(k-1),u(k))$ and the input $u(k)$, where they model the evolution of the states as:

$$X_{k,i} = f(X_{k-1,i}, u(k)) \qquad (11)$$

A weighted *mean* $\hat{x}_k$ and covariance $\hat{P}_{xx}$ are obtained from the propagated points, as:

$$\hat{x}_k = \sum_{i=0}^{2n} w_i \cdot X_{k,i} \qquad (12)$$

$$\hat{P}_{xx} = \sum_{i=0}^{2n} w_i \cdot (X_{k,i} - \hat{x}_k) \cdot (X_{k,i} - \hat{x}_k)^T + Q \qquad (13)$$

where the weight $w_i$ is [14]:

$$w_i = \begin{cases} \dfrac{\lambda}{n+\lambda} & i = 0, mean \\ \dfrac{\lambda}{n+\lambda} + (1-\alpha^2+\beta) & i = 0, covariance. \\ \dfrac{\lambda}{2\cdot(n+\lambda)} & i > 0 \end{cases} \qquad (14)$$

$\beta$ allows to incorporate a priori knowledge of the distribution of $x$. For a Gaussian distribution $\beta = 2$ is optimal.

The observation model is computed evaluating the propagated "sigma" points with the observation function $h$ () as:

$$Y_i = h(X_{k,i}). \qquad (15)$$

The mean value $\hat{y}$, the covariance of the observation $P_{yy}$ and the covariance between the states and the measurement $P_{xy}$ are calculated as follows:

$$\hat{y} = \sum_{i=0}^{2n} w_i \cdot Y_i \qquad (16)$$

$$P_{yy} = \sum_{i=0}^{2n} w_i \cdot (Y_i - \hat{y}) \cdot (Y_i - \hat{y})^T + R \qquad (17)$$

$$P_{xy} = \sum_{i=0}^{2n} w_i \cdot (X_{k,i} - \hat{x}_k) \cdot (Y_i - \hat{y})^T. \qquad (18)$$

Finally, the states are updated with the real measurement y as:

$$K = P_{xy} \cdot P_{yy}^{-1} \qquad (19)$$

$$\overline{x}_k = \hat{x}_k + K \cdot (y - \hat{y}) \qquad (20)$$

$$P_k = \overline{P}_{xx} - K \cdot P_{yy} \cdot K^T. \qquad (21)$$

5.1.4 Direct Magnetic Heading

There are many ways to include the information from the magnetic field in PDR. The author in [12] proposed a step length detector with a yaw change measured from the change in the magnetic orientation. The author in [8] proposed to integrate the yaw measured using the Magnetometer as a measurements of an EKF. Both methods are based in obtaining the magnetic field in a modified navigation frame (taking into account the pitch $\theta$ and roll $\phi$) which we will denote as $B_{n'}(k)$. This reference frame has the X and Y axis in the horizontal plane but the X will point in the same direction than the sensor's X axis. $B_{n'}(k)$ is obtained from the magnetic field measured by the sensor $B_b(k)$ as:

$$B_{n'}(k) = \begin{bmatrix} \cos\theta(k) & 0 & \sin\theta(k) \\ 0 & 1 & 0 \\ -\sin\theta(k) & 0 & \cos\theta(k) \end{bmatrix} \cdot \begin{bmatrix} 1 & 0 & 0 \\ 0 & \cos\phi(k) & -\sin\phi(k) \\ 0 & \sin\phi(k) & \cos\phi(k) \end{bmatrix} \cdot B_b(k). \qquad (22)$$

The magnetic yaw is obtained measuring the opposite angle of $B_{n'}(k)$ with respect to the X axis and removing the magnetic declination $M_d$, as:

$$\psi_m(k) = -\arctan(B_{n'}(k)_y, B_{n'}(k)_x) - M_d. \qquad (23)$$

**5.1.5 Change in the Measured Magnetic Field due to the Turn Rates**

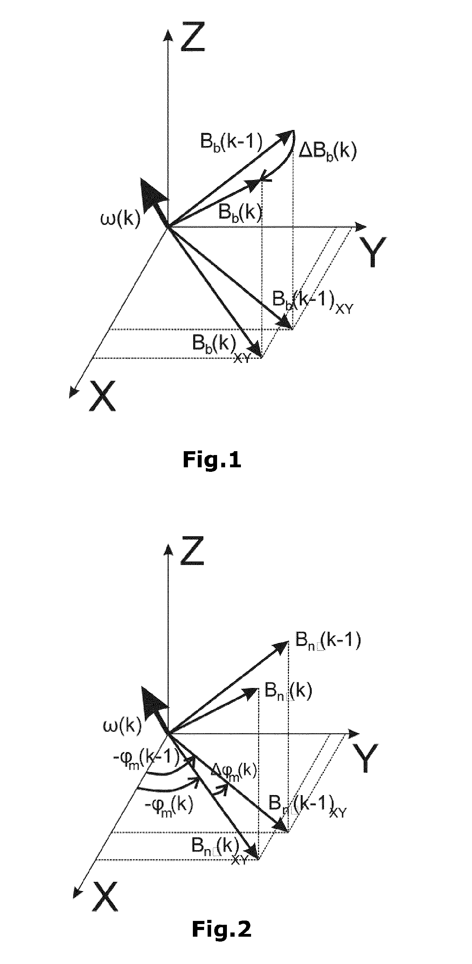

Without displacements, the magnetic field in the navigation frame remains constant, even with rotations of the sensor (assuming the rotation is around the sensor and the sensor is very small). If we assume a constant magnetic field (even with a constant perturbation) it is possible to relate the turn rates to the changes of the magnetic field in the sensor frame. In Fig. 1 we observe the measured magnetic field in the time instants $k$ and $k$-1, due to the fact that the sensor is rotating there is an apparent rotation of $B_b$ that is rtelated to the turn rate $\omega(k)$. The relationship is non-linear and depends on the angle between the rotation and magnetic field, therefore it cannot be straightforwardly implemented in a PDR using an EKF.

The change in the measured magnetic field $\Delta B_b(k)$ is:

$$\Delta B_b(k) = B_b(k) - B_b(k-1). \qquad (24)$$

Passing the measurements from the sensor frame to the navigation frame using $B_b(k) = C_b^n(k)^T \cdot B_n(k)$, we obtain:

$$\Delta B_b(k) = C_b^n(k)^T \cdot B_n(k) - C_b^n(k-1)^T \cdot B_n(k-1). \qquad (25)$$

The Direction Cosine Matrix $C_b^n(k)$ can be rewritten as its propagation from the previous value (eq. 1), therefore the relationship will be:

$$\Delta B_b(k) = (C_b^n(k-1) \cdot e^{\Omega_{nb}^b(k)\cdot\Delta t})^T \cdot B_n(k) - C_b^n(k-1)^T \cdot B_n(k-1)$$

$$= e^{-\Omega_{nb}^b(k)\cdot\Delta t} \cdot C_b^n(k-1)^T \cdot B_n(k) - C_b^n(k-1)^T \cdot B_n(k-1). \qquad (26)$$

The magnetic field in the navigation frame durng the moment $k$ can be written as $B_n(k)=B_n(k-1)+\varepsilon_B$, where $\varepsilon_B$ is the change in the magnetic disturbance. Therefore, equation 26 can be rewritten as:

$$\Delta B_b(k) = e^{-\Omega_{nb}^b(k)\cdot\Delta t} \cdot C_b^n(k-1)^T \cdot (B_n(k-1)+\varepsilon_B) - C_b^n(k-1)^T \cdot B_n(k-1) \qquad (27)$$

$$= (e^{-\Omega_{nb}^b(k)\cdot\Delta t} - I) \cdot C_b^n(k-1)^T \cdot B_n(k-1) + e^{-\Omega_{nb}^b(k)\cdot\Delta t} \cdot C_b^n(k-1)^T \cdot \varepsilon_B.$$

Using the fact that $C_b^n(k-1)^T \cdot B_n(k-1) = B_b(k-1)$ and $e^{-\Omega_{nb}^b(k)\cdot\Delta t} \cdot C_b^n(k-1)^T = (C_b^n(k-1) \cdot e^{\Omega_{nb}^b(k)\cdot\Delta t})^T = C_b^n(k)^T$, the change in the sensor magnetic field will be:

$$\Delta B_b(k) = (e^{-\Omega_{nb}^b(k)\cdot\Delta t} - I) \cdot B_b(k-1) + C_b^n(k)^T \cdot \varepsilon_B. \qquad (28)$$

This equation relates the change in the measured magnetic field $\Delta B_b(k)$ with the turn rates $\omega(k)$ (implicit in

$$\Omega^b_{nb}(k)).$$

### 5.2 Motivation

It is clear that the IMU based PDR needs heading information to avoid significant errors in the positioning. Indoors the presence of magnetic disturbances make it difficult to use of this measurement and force the estimation to depend on the propagation of the turn rates from the Gyroscope. The addition of Zero Angular Rate Update (ZARU) measurement significantly reduces the effect of the drift in the bias of the Gyroscope. However, without a correct still phase at the beginning of any trajectory, the errors generated by the accumulation of the gyroscope bias might become excessive.

After evaluating the orientation stability during the stance phases of pedestrian walks, we have discovered the presence of small residual turn rates that makes it impossible to directly use aggressive (low measurement co-variance) ZARUs during the stance phases of a walk. However it can be assumed that during the stance, the position dependant magnetic disturbances for a foot-mounted IMU will remain constant, or very small, and the changes in the measured magnetic field will be associated with the real turn rates, providing information to estimate the biases in the Gyroscopes and for a better estimate of the attitude.

We even allow for the method to be used while the person is walking or the IMU is placed in another part of the body: the distance travelled between two measurements is very small and even though there is some displacement, the resulting error of the magnetic orientation change is expected to be unbiased over time, so these MARU measurements can be incorporated with a higher co-variance, if needed, than the MARUs measurements during the true stance.

As we can see in equation 28 the relationship function is non-linear. We propose four MARU methods, the first treats the problem in the horizontal plane and measures the changes in the heading obtained from the Magnetometer. The second is a measure of the change in three dimensions that will provide the most information, due to the non-linearities of this first two problems they must be implemented in an UKF. The third method uses a first order approximation of the equation 28 as a way to obtain a linear relationship to use in an EKF. Finally, the fourth method applies either of the first three methods to the moving (stride) phase, and not just during the stance, but in this case we will typically employ a different measurement co-variance.

Additional features: The co-variance of the MARU measurement noise can be chosen as a function of one or more of the following:

> 1. Duration of the stance, with or without a non-causal look ahead period (i.e. the stance has lasted and will last a certain duration). We can decrease the measurement co-variance during the inner part (in time) of the stance.

> 2. The certainty of the detected stance by using the distance of the IMU measurements or derived accelerations to the stance thresholds (e.g. acceleration and / or turn rate thresholds). We can decrease the measurement co-variance if the distances are larger (i.e. a more certain stance).

> 3. If used during the stride, we can reduce the co-variance if the speed of the stride is slower.

By measuring the changes in the magnetic field we are able to minimize the effect of the drift of the yaw in the cases were we do not have an initial still phase or sufficient ZARUs. This bias estimation method (MARU), as opposed to ZARU, can be used along a typical walk during each detected stance phase (or even during the stride); making this measurement much more available for a successful PDR.

### 5.3 Proposed Approach

We propose the use of the rotations detected in the magnetic field during the stance phase of the walk (or stride) as information to limit the drift in the yaw, provide a better attitude propagation and a better Gyroscope bias estimation. Due to the non linearities present in the attitude propagation and measurement relationships, we propose the use of an Unscented Kalman Filter and examine the possibility of using a first order approximation for an EKF.

In this work we establish three strategies to use the magnetic field changes as information for the turn rates:

> 1. **Change in the magnetic heading:** This approach associates the change in the magnetic heading (the magnetic field in the horizontal plane) with the change in the estimated yaw and therefore with the turn rate in the vertical axis.

> 2. **Magnetic rotation:** Using an UKF is possible to directly associate the turn rates and the magnetic field changes in a three dimensional space and therefore obtain information of the attitude change and the turn rates.

3. **Magnetic rotation first order approximation:** An approximation is used to implement the relationship of the magnetic rotation with the Gyroscope bias to be used in an EKF.

All of these three methods can be applied also to the moving (stride) phase, and not just during the stance, but in this case we will typically employ a different measurement co-variance.

The use of any of these methods will depend on the desired processing effort and states implemented. The presence of changing magnetic fields (moving metal objects, motors, etc) might alter the measurements and it is necessary to establish a threshold as a way to minimize the effect, this limit will be discussed in each of the three cases next.

### 5.3.1 Change in the Magnetic Heading

A first approach to take advantage of the magnetic field is the use of the magnetic heading. The use of ZUPT measurements provide information about the roll an pitch but the yaw $\psi$ remains unobserved. Due to the fact that in indoor environments, the heading is altered by magnetic perturbations that due to their nature are position correlated, we can not use the direct heading. However during a stance (or stride) the perturbation will remain (nearly) constant and therefore the change in the magnetic heading will not be altered (much) and can be used for yaw drift correction.

We propose the use of the change in the angle in the horizontal plane from the magnetic field to the X axis of the sensor frame (IMU heading) during the stance (or stride) as a measurement of the change in the yaw as observed in the Fig. 2. Using equations 22, 23 and the estimated roll and pitch we can obtain the observation function $Y()$ and the measurement value $y()$ as:

$$\Delta\psi_m(k) = -\arctan(B_{n'}(k)_y, B_{n'}(k)_x) - M_d - (-\arctan(B_{n'}(k-1)_y, B_{n'}(k-1)_x) - M_d)$$

$$= \arctan(B_{n'}(k-1)_y, B_{n'}(k-1)_x) - \arctan(B_{n'}(k)_y, B_{n'}(k)_x) \qquad (29)$$

$$y(k) = \arctan(B_{n'}(k-1)_y, B_{n'}(k-1)_x) - \arctan(B_{n'}(k)_y, B_{n'}(k)_x) \qquad (30)$$

$$Y(k) = \psi(k) - \psi(k-1). \qquad (31)$$

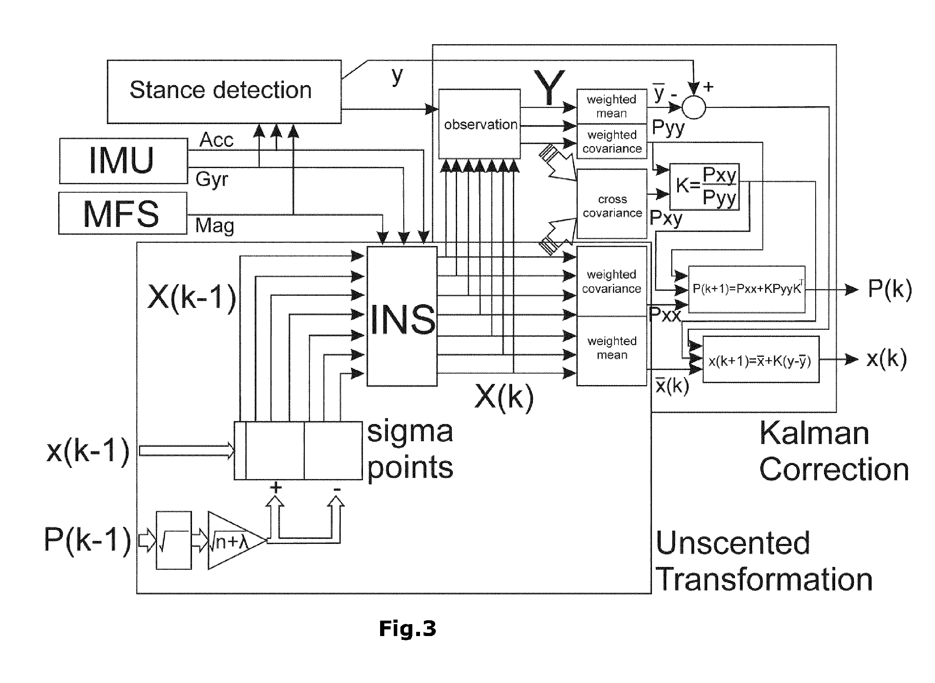

For the estimation of the observation on each point we must use the previous and the propagated yaw value, $\psi(k-1)$ and $\psi(k)$ respectively, corresponding to the evaluated "sigma" point. The difference between them will be related to the change in the magnetic heading. This is implemented using an UKF. The general structure of the implemented UKF can be observed in Fig. 3. For an EKF, it can be advantageous to use the mean derivative $(\psi(k)-\psi(k-1))/\Delta t)$ as an approximation of the turn rate in the vertical axis.

For the detection of the MARU with the change in the magnetic heading we should assume that the IMU is in a stance phase (unless applying it during the stride), where we assumed a limit $\gamma_a$ for the norm of the measured acceleration (*Acc*) and optionally a limit $\gamma_\omega$ for the norm of the measured turn rate (*Gyr*). The change in the yaw should not be over the maximal change  permitted with that value, therefore a limit $\gamma_\psi$ for the norm of the change of the heading can be:

$$\gamma_\psi = \gamma_\omega \cdot \Delta t. \qquad (32)$$

Optionally adding this to the stance assumption, the condition $T_{mh}$ to use the MARU measurement with the change in the magnetic heading becomes:

$$T_{mh}(Acc, Gyr, \Delta\psi_m) = (\|Acc\| < \gamma_a) \& (\|Gyr\| < \gamma_\omega) \& (\|\Delta\psi_m(k)\| < \gamma_\psi). \qquad (33)$$

**5.3.2 Magnetic Rotation**

Starting from the equation 28 and if the foot is on a stance phase, any position dependant perturbation will be constant and we can assume that $\varepsilon_B$ will be caused only by the random noise of the Magnetometer (or very small if applied during the stride). We propose the use of the UKF represented in Fig. 3 and the expression from equation 3 for $e^{-\Omega_{nb}^b(k)\cdot\Delta t}$, discarding $\varepsilon_B$ to propagate the attitude and estimate the Gyroscope bias. Combining equation 3 and equation 28 results in:

$$\Delta B_b(k) = \left(-\frac{\sin(\|\omega(k)\Delta T\|)}{\|\omega(k)\|}\Omega_{nb}^b(k) + \frac{(1-\cos(\|\omega(k)\Delta T\|))}{\|\omega(k)\|^2}\Omega_{nb}^b(k)^2\right)\cdot B_b(k-1) + C_b^n(k)^T\cdot\varepsilon_B.$$

$$(34)$$

where $\omega(k)$ represents the turn rate after eliminating the bias, $\omega(k) = Gyr(k) - \Delta\omega(k)$. The measurement $y(k)$ and the observation function $Y(k) = h(k)$ are:

$$y(k) = B_b(k) - B_b(k-1) \qquad (35)$$

$$Y(k) = \left(-\frac{\sin(\|\omega(k)\Delta T\|)}{\|\omega(k)\|}\Omega_{nb}^b(k) + \frac{(1-\cos(\|\omega(k)\Delta T\|))}{\|\omega(k)\|^2}\Omega_{nb}^b(k)^2\right)\cdot B_b(k-1). \qquad (36)$$

As a way to avoid the changes in the magnetic disturbances we propose to optionally limit the norm of the change in the magnetic field $\|\Delta B_b\|$ to the arc formed by the vector $B_b$ when the turn rate is perpendicular to it. Using the optional limit $\gamma_\omega$ established in section 5.3.1 for the turn rate during the time $\Delta t$, the limit $\gamma_B$ for the change in the magnetic field will be:

$$\gamma_B = \gamma_\omega\cdot\Delta t\cdot B_b(k-1). \qquad (37)$$

Adding this to the stance assumption (or during the stride), the condition $T_{mr}$ to use the MARU measurement with magnetic rotations will be:

$$T_{mr}(Acc, Gyr, \Delta B_b(k))_k = (\|Acc\| < \gamma_a)\ \&\ (\|Gyr\| < \gamma_\omega)\ \&\ (\|\Delta B_b(k)\| < \gamma_B). \qquad (38)$$

**5.3.3 Magnetic Rotation First Order Approximation**

Although the UKF offers a better behavior for non-linear systems it might be advantageous to implement an EKF. In this case we propose a linearized form of equation 28. The first order approximation of $e^{-\Omega_{nb}^b(k)\cdot\Delta t}$ is:

$$e^{-\Omega_{nb}^b(k)\cdot\Delta t} = I - \Omega_{nb}^b(k)\cdot\Delta t$$

$$= I - [\omega(k)\Delta t \quad \times]. \qquad (39)$$

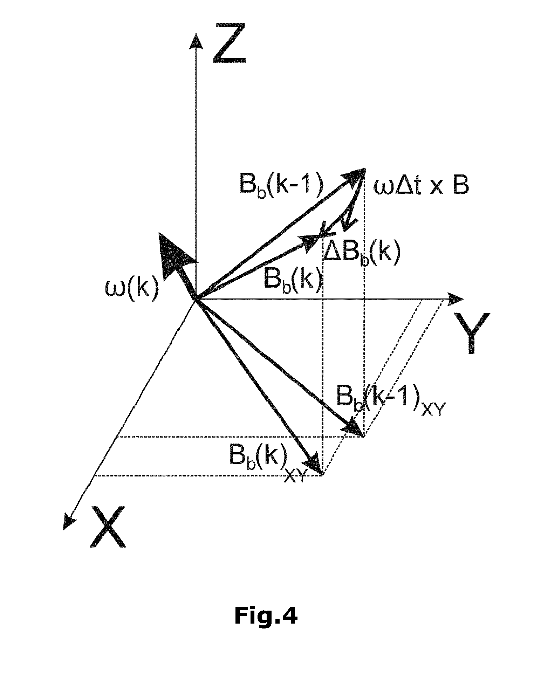

This corresponds to $\omega\Delta t$ x B in the Fig. 4, a linear approximation of the movement of the vector $B_b$ according to the turn rate. Inserting this approximation in equation 28 we obtain:

$$\Delta B_b(k) = -[\omega(k)\Delta t \quad \times] \cdot B_b(k-1) + C_b^n(k)^T \cdot \varepsilon_B. \tag{40}$$

Adding the effect of the bias in the Gyroscope $(\omega(k) = Gyr(k)-\Delta\omega(k))$ to the previous equation results in:

$$\Delta B_b(k) = -[(Gyr(k) - \Delta\omega(k))\Delta t \quad \times] \cdot B_b(k-1) + C_b^n(k)^T \cdot \varepsilon_B$$

$$= -[Gyr(k)\Delta t \quad \times] \cdot B_b(k-1) + [\Delta\omega(k)\Delta t \quad \times] \cdot B_b(k-1) + C_b^n(k)^T \cdot \varepsilon_B.$$

Reordering the equation to represent a linear relationship between the measurement and $\Delta\omega(k)$ leads to:

$$\Delta B_b(k) + [Gyr(k)\Delta t \quad \times] \cdot B_b(k-1) = [-B_b(k-1)\Delta t \quad \times] \cdot \Delta\omega(k) + C_b^n(k)^T \cdot \varepsilon_B. \tag{41}$$

The measurement $m(k)$ and the observation matrix $H(k)$ (for a 15 states EKF) becomes;

$$m(k) = \Delta B_b(k) + [Gyr(k)\Delta t \quad \times] \cdot B_b(k-1) \tag{42}$$

$$H(k) = \begin{bmatrix} \mathbf{I}_{3x3} & [-B_b(k-1)\Delta t \quad \times] & 0_{3x3} & 0_{3x3} & 0_{3x3} \end{bmatrix} \tag{43}$$

It is possible to detect the measurement using the same threshold established in equation 37 and 38. This observation matrix is the same as the one obtained in [2] and [3] but the generality of the method, the detection and the implementation differ.

**Further Description of and Explanations for the Invention**

**6. Introduction**

The recent improvements in the Micro Electro Mechanical (MEM) technology has allowed the development of Inertial Measurements Units (IMU) that due to thier size and weight can be easily carried by a pedestrian. Obtaining the position from a high grade IMU is done using an Inertial Navigation System (INS) [13, 15]. However high grade IMUs can not be carried by a pedestrian due to their size and weight. MEM IMUs present amounts of bias an noise that would generate large errors in few seconds. Many authors [16, 6, 17, 18, 19] had used the identification of the stance phase in a foot-mounted IMU to limit the growth of the errors. Among them Foxlin [6] was the first to use an Extended Kalman Filter (EKF) to estimate and subtract the errors in the navigation states by imposing a Zero velocity UPdaTe (ZUPT) during the stance. Another common measurement as detailed in [17], is the assumption of a fixed orientation when the sensor is in a still phase, allowing a Zero Angular Rate Update (ZARU) that helps estimating the bias of the gyroscope. All these methods are based on a first order approximation of the propagation of a non-linear model of the states. We aim to propose a filter that is better adapted to the non-linear problem and to obtain information about the orientation from the magnetic measurements even in the presence of magnetic disturbances.

The use of a first order approximation of a non linear problem can lead to systematic errors, therefore we propose the use of an Unscented Kalman Filter (UKF) as stated in [20, 14]. Unlike the EKF, the UKF propagates the mean and covariance of the estimation using several sigma points around the estimated mean and then measures the mean and covariance of the propagated points. Theoretically the UKF is able to correctly estimate up to the third order term of the Taylor Series of the mean and up to the second order term of the Taylor series of the Covariance [7], while the EKF is capable of estimating only the first order term.

One of the main sources of errors in PDR is the increment of the yaw error due to the fact that it is a non observable state. Many authors such as in [16, 8, 2] have used the Magnetic North measurements as direct measurements for the heading, but we have seen that due to the position related magnetic disturbances these measurements can generate errors in the position. In this work we propose to use the changes in the magnetic field during the stance to detect the turn rates of the sensor. This method can be used even in the presence of magnetic disturbances since they are position dependant. We will call this method Magnetic Angular Rate Update (MARU).

One of the main subjects in PDR is the Stance detection and many authors has proposed several detection methods [21, 22, 23, 24]. They provide binary decisions that are usually optimized to avoid false stance detections by setting strong thresholds at the cost of reducing the stance samples. This reduces the amount of information that the filter receives and in some cases (fast walk, running, etc.) might result in not detecting the stances. In this work we propose the use of a soft threshold and a gradual change between the stance and swing phases as a way to implement a soft decision over the presence of a Stance.

This paper is structured as follows. In section 7, we propose the structure of a general UKF for PDR estimation. In section 8, we establish the concept of using the change in the magnetic field as source of information for the gyroscope and the orientation propagation. Three methods are proposed in this section to implement this measurement according to the available states and sensors. In section 9, we study the step detection and propose a method to gradually switch between swing and stance detection, providing an indication of the uncertainty of that measurement. In section 10, we evaluate the proposed methods with different test signals. In section 11, conclusions are summarized.

## 7. Unscented Kalman Filter

Although the Extended Kalman Filter has proven to be a good estimator in PDR, under some conditions it might generate systematic errors due to the first order approximation of the orientation propagation. In this section, we will propose a new estimator; the Unscented Kalman Filter, which measures the evolution of the different states and the influence of the measurements using "sigma" points. The filter is usually separated into the Unscented Transformation (UT) that estimates the propagation of the states, and the filter update that associates the measurements with the changes in the states and correct them to minimize the covariance.

### 7.1 Propagation of the States

We will study first the evolution of the states, given measurements $Acc(k)=[Acc_x(k), Acc_y(k), Acc_z(k)]^T$ from the accelerometer and $Gyr(k)=[Gyr_x(k), Gyr_y(k), Gyr_z(k)]^T$ from the gyroscope in each sensor axis ($i = x,y,z$). After the removal of the biases ($\Delta\alpha$ and $\Delta\omega$ respectively), we can obtain the turn rate $\omega_b(k) = Gyr(k) - \Delta\omega(k)$ and the acceleration $a_b=Acc(k)-\Delta a$, both in the sensor reference frame (subindex $b$).

The measurements can be transformed to a navigation frame (subindex n, usually North-West-Up) using the Direction Cosine Matrix $C_b^n(k)$, so the velocity $\dot{r}(k)$ and position $r(k)$ can be obtained as:

$$r(k) = r(k-1) + (C_b^n(k) \cdot a_b(k) - g) \cdot \Delta t, \qquad (1)$$

$$r(k) = r(k-1) + \frac{(r(k)+r(k-1))}{2} \cdot \Delta t. \qquad (2)$$

The value of $C_b^n(k)$ is propagated using [13]:

$$C_b^n(k) = C_b^n(k-1) \cdot e^{\Omega_{nb}^b(k)\cdot\Delta t}, \qquad (3)$$

where the skew symmetrical matrix $\Omega_{nb}^b(k)$ is:

$$\Omega_{nb}^{b}(k) = [\omega_{b}(k) \quad \times] = \begin{bmatrix} 0 & -\omega_{z}(k) & \omega_{y}(k) \\ \omega_{z}(k) & 0 & -\omega_{x}(k) \\ -\omega_{y}(k) & \omega_{x}(k) & 0 \end{bmatrix}, \tag{4}$$

and is equivalent to the cross product with the vector $\omega_b(k)$. Equation 3 can be expressed as in [13]:

$$e^{\Omega_{nb}^{b}\cdot\Delta t} = I + \frac{\sin(\|\omega\Delta T\|)}{\|\omega\|}\Omega_{nb}^{b} + \frac{(1-\cos(\|\omega\Delta T\|))}{\|\omega\|^{2}}\Omega_{nb}^{b}{}^{2}, \tag{5}$$

and it represents the source of the non-linearities of the system. The state propagation is included in the function $x(k) = f(x(k-1),u(k))$, where $u(k)$ refers to the IMU measurements.

### 7.2 Unscented Transformation

The UKF measures the behavior of the transition with the Unscented Transformation. It uses several symmetrical "sigma" points around the mean of the states $\bar{x}_{k-1}$. The "sigma" points are established as in [7]:

$$X_{k-1,i} = \begin{cases} \bar{x}_{k-1} & i = 0 \\ \bar{x}_{k-1} + (\sqrt{(n+\lambda)P_{k-1}})_{i} & i = 1,...,n \\ \bar{x}_{k-1} - (\sqrt{(n+\lambda)P_{k-1}})_{i-n} & i = n+1,...,2n \end{cases} \tag{6}$$

where $(\sqrt{(n+\lambda)P_{k-1}})_{i}$ represents the column i of the matrix squared root of the weighted covariance $P_{k-1}$ and it can be obtained using the eigenvalues decomposition. We will obtain $2n+1$ sigma points, where $n$ is the number of states and $\lambda = \alpha^2(n+\kappa)-n$ is a scale factor where $\alpha$ and $\kappa$ are used to change the dispersion of the points.

Using a scaled squared root of the covariance, it is possible to obtain the covariance of the propagated states through the weighted cross correlation of the points. Each $X_{k-1,i}$ point is propagated using the function $f(x(k-1),u(k))$ and the input $u(k)$, where they model the evolution of the states as:

$$X_{k,i} = f(X_{k-1,i}, u(k)) \tag{7}$$

A weighted *mean* $\hat{x}_k$ and covariance $\hat{P}_{xx}$ are obtained from the propagated points, as:

$$\hat{x}_{k} = \sum_{i=0}^{2n} w_{i} \cdot X_{k,i} \tag{8}$$

$$\hat{P}_{xx} = \sum_{i=0}^{2n} w_{i} \cdot (X_{k,i} - \hat{x}_{k}) \cdot (X_{k,i} - \hat{x}_{k})^{T} + Q \tag{9}$$

where the weight $w_i$ is [14]:

$$w_i = \begin{cases} \dfrac{\lambda}{n+\lambda} & i = 0, mean \\ \dfrac{\lambda}{n+\lambda} + (1-\alpha^2+\beta) & i = 0, covariance, \\ \dfrac{\lambda}{2 \cdot (n+\lambda)} & i > 0 \end{cases} \qquad (10)$$

where β is a parameter that allows to incorporate the a priori knowledge of the distribution of *x*. For a Gaussian distribution β=2 is optimal. The values of $\hat{x}_k$ and $\hat{P}_{xx}$ are the estimations of the evolution of the probability distribution.

### 7.3 Measurement Update

In the presence of any measurement (ZUPT, ZARU, etc.), we will estimate the effect of the small changes in the states with respect to the observations. The observation mean and covariance are computed evaluating the propagated "sigma" points with the observation function *h*() as:

$$Y_i = h(X_{k,i}). \qquad (11)$$

The mean value $\hat{y}$, the covariance of the observation $P_{yy}$ and the covariance between the states and the measurement $P_{xy}$ are calculated as follows:

$$\hat{y} = \sum_{i=0}^{2n} w_i \cdot Y_i \qquad (12)$$

$$P_{yy} = \sum_{i=0}^{2n} w_i \cdot (Y_i - \hat{y}) \cdot (Y_i - \hat{y})^T + R \qquad (13)$$

$$P_{xy} = \sum_{i=0}^{2n} w_i \cdot (X_{k,i} - \hat{x}_k) \cdot (Y_i - \hat{y})^T. \qquad (14)$$

Finally, we can update the states with the real measurement y as:

$$K = P_{xy} \cdot P_{yy}^{-1} \qquad (15)$$

$$\bar{x}_k = \hat{x}_k + K \cdot (y - \hat{y}) \qquad (16)$$

$$P_k = \bar{P}_{xx} - K \cdot P_{yy} \cdot K^T. \qquad (17)$$

### 7.4 UKF in PDR

One of the most common states representation used in an EKF for PDR is a 15 error states representation, where the modeled states are the orientation errors in the navigation frame, the bias in the gyroscope, the error in the position, the error in the velocity and the bias in the accelerometer (each of them in 3 dimensions). This representation is used to generate a more linear problem and diminish the propagation errors. However in the case of the UKF we can use the direct navigation states: Orientation $\Psi$ as Euler angles (Roll $\phi$, Pitch $\theta$ and Yaw $\psi$), position $r$ and velocity $\dot{r}$ and the biases of the instrument ($\Delta\alpha$ and $\Delta\omega$), although any other reduced states can be used. Hence, our state vector will be:

$$x(k) = \begin{bmatrix} \Psi^T & \Delta\omega^T & r^T & \dot{r}^T & \Delta a^T \end{bmatrix}^T. \qquad (18)$$

The structure of the filter can be observed in the Fig. 3. In our implementation we propagate each sigma point using the values of the measured turn rate and acceleration and we can estimate the mean and covariance of the states according to the distribution of the points. Observing the signals from the accelerometer and gyroscope, we can determine the step phases. During the swing, we will use the estimated mean and covariance of the UT. During a stance, we observe the estimated states $X(k)$ according to the desired measurements ($Y_{ZUPT,i} = \dot{r}(k,i)$ for ZUPT and $Y_{Z4RU,i} = \Delta\omega(k, i)$ for ZARU) and determine the estimated mean, the covariance of the measurements and the correlation between the changes in the states and the changes in the measurements. Using equations 16 and 17 we can obtain the corrected states.

For the evaluation of the UKF we used the data set 14 of [25]. The signal was recorded from an IMU placed in the instep of the right foot, while doing a 5 minutes closed loop trajectory with 3 seconds of stance before the first movement. The ground truth was recorded with a camera motion system. In this work we propose an evaluation criterion based on the height error, the yaw error (the accumulation of the heading change error $\Delta\theta$) and the step length accumulated error. We evaluated the following representations:

- **15 states:** full state representation, with ZUPT and ZARU.
- **14 states:** state representation without the yaw state, with ZUPT and ZARU.
- **12 states:** state representation without the accelerometer bias states, with ZUPT and ZARU.
- **11 states:** state representation without the accelerometer bias states nor the yaw state, with ZUPT and ZARU.
- **9 states:** state representation with none of the bias states, with ZUPT only.
- **8 states:** state representation with none of the bias states nor the yaw state, with ZUPT only.

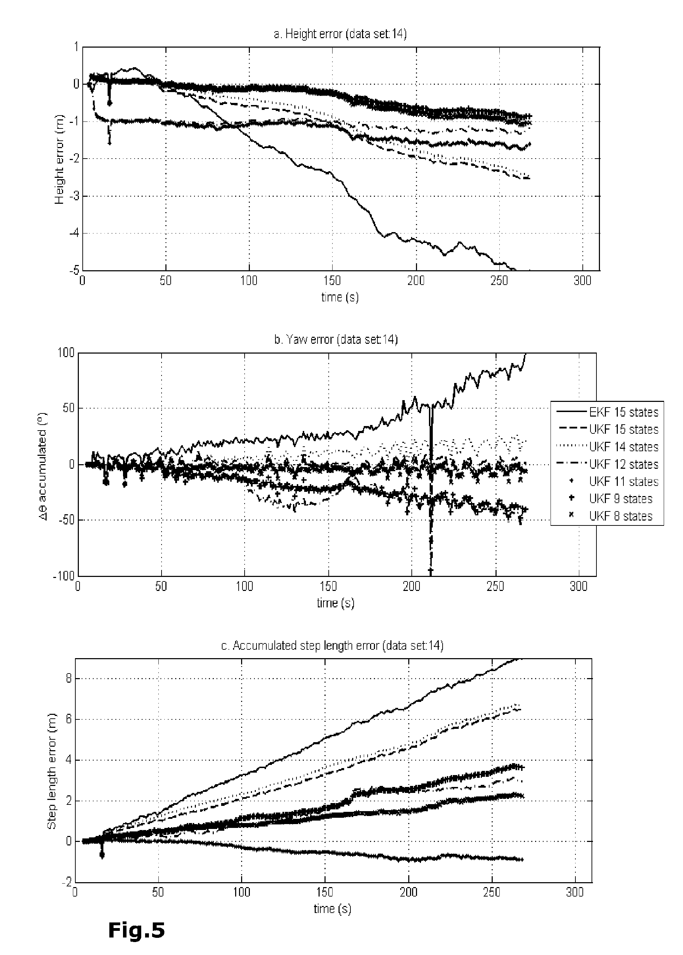

In the Fig. 5, we can observe that the UKF behaves better than the EKF in most conditions, particulary in 15 and 9 states versions. From now and on, we will use the 15 states UKF filter when referring to the UKF.

## 8. Magnetic Angular Rate Update (MARU)

Many IMUs usually have a magnetometer and accordingly, many PDR implementations such as in [16, 8] and [1] make use of that measurement to provide information about the orientation. Indoors, the presence of magnetic disturbances usually causes local errors in the yaw that due to the integration can generate high positioning errors. Today's buildings are usually constructed using metallic structures, and that generates strong position dependant magnetic perturbations.

We propose to use the change in the magnetic filed to provide a measurement of the turn rates of the sensor. This will allow us to use any magnetic field that is constant with time, which can be assumed during the stance phase in a foot-mounted IMU. If we rotate an IMU while the magnetic field is constant in the navigation frame, we will observe a rotation of the measured magnetic field as it can be seen in the Fig. 1. In the figure $B_b(k)$ and $B_b(k$-1) represent the actual and previous measured magnetic field, $\omega(k)$ the turn rate of the sensor and $\Delta B_b(k)$ the resulting change in the measured magnetic field. We will call this measurement Magnetic Angular Rate Update (MARU).

We plan to use this measurement as information to limit the drift in the yaw, provide a better attitude propagation and a better Gyroscope bias estimation. Due to the non-linearities present in the attitude propagation and measurement relationships, we can use the UKF, but in the case of a EKF, a first order approximation is needed.

In this work we establish three strategies to use the magnetic field changes as information for the turn rates:

- **Change in the magnetic heading:** This approach associates the change in the magnetic heading (the magnetic field in the horizontal plane) with the change in the estimated yaw and therefore with the turn rate in the vertical axis.
- **Magnetic rotation:** Using an UKF, it is possible to directly associate the turn rates and the magnetic field changes in a three dimensional space and therefore obtain information on the attitude change and the turn rates.
- **Magnetic rotation first order approximation:** A linear approximation can be used in an EKF, to implement the relationship of the magnetic rotation with the Gyroscope biases as a measurement.

The use of any of these methods will depend on the desired processing effort and the states implemented. The presence of changing magnetic fields (moving metal objects, motors, etc.) might alter the measurements and therefore, it is necessary to establish a threshold as a way to minimize this effect. This threshold will be discussed for each of the three cases next.

**8.1 Change in the magnetic heading**

A first approach to take advantage of the magnetic field changes is the use of the magnetic heading. The use of ZUPT measurements provide information about the roll an pitch but the yaw $\psi$ remains unobserved. During a stance the changes of the magnetically detected yaw must be correlated with the changes in the INS orientation, therefore we will use that information to decrease the error in the yaw.

We propose the use of the change in the angle in the horizontal plane from the magnetic field to the X axis of the sensor frame (IMU heading) during the stance as a measurement of the change in the yaw as observed in the Fig. 2. Transforming the magnetic field measurements from the sensor frame to a horizontal plane (correcting the roll $\phi$ and pitch $\theta$, subindex $n'$) as:

$$B_{n'}(k) = R_\theta \cdot R_\phi \cdot B_b(k), \qquad (19)$$

where:

$$R_\theta = \begin{bmatrix} \cos\theta(k) & 0 & \sin\theta(k) \\ 0 & 1 & 0 \\ -\sin\theta(k) & 0 & \cos\theta(k) \end{bmatrix}, \qquad (20)$$

$$R_\phi = \begin{bmatrix} 1 & 0 & 0 \\ 0 & \cos\phi(k) & -\sin\phi(k) \\ 0 & \sin\phi(k) & \cos\phi(k) \end{bmatrix}. \qquad (21)$$

we can obtain the magnetic yaw as:

$$\psi_m(k) = -\arctan(B_{n'}(k)_y, B_{n'}(k)_x) - M_d. \qquad (22)$$

The observation function $Y()$ and the measurement value $y()$ for the UKF will be:

$$\Delta\psi_m(k) = \Psi_m(k) - \Psi_m(k-1) \qquad (23)$$

$$y(k) = \arctan(B_{n'}(k-1)_y, B_{n'}(k-1)_x) - \arctan(B_{n'}(k)_y, B_{n'}(k)_x) \qquad (24)$$

$$Y(k) = \psi(k) - \psi(k-1). \qquad (25)$$

For the estimation of the observation on each point we must use the previous and the propagated yaw value, $\psi(k-1)$ and $\psi(k)$ respectively, corresponding to the evaluated "sigma" point. The difference between them will be related to the change in the magnetic heading. This is implemented using an UKF. The general structure of the implemented UKF can be observed in Fig. 3.

For the detection of the MARU with the change in the magnetic heading we must assume that the IMU is in a stance phase, where we assumed a limit $\gamma_\alpha$ for the norm of the measured acceleration (*Acc*) and a limit $\gamma_\omega$ for the norm of the measured turn rate (*Gyr*). The change in the yaw must not be over the maximal change permitted with that value, therefore the limit $\gamma_\psi$ for the norm of the change of the heading must be:

$$\gamma_\psi = \gamma_\omega \cdot \Delta t. \qquad (26)$$

Adding this to the stance assumption, the condition $T_{mh}$ to use the MARU measurement with the change in the magnetic heading becomes:

$$T_{mh}(Acc, Gyr, \Delta\psi_m) = \left(\|Acc\| < \gamma_a\right) \& \left(\|Gyr\| < \gamma_\omega\right) \& \left(\|\Delta\psi_m(k)\| < \gamma_\psi\right). \qquad (27)$$

### 8.2 Magnetic rotation

Observing the rotation of the magnetic field due to an turn rate can provide more information about the turn rates, therefor we will study the change of the measured magnetic field in the sensor frame.

The change in the measured magnetic field $\Delta B_b(k)$ is:

$$\Delta B_b(k) = B_b(k) - B_b(k-1). \qquad (28)$$

Transforming the measurements from the sensor frame to the navigation frame using $B_b(k) = C_b^n(k)^T \cdot B_n(k)$, we obtain:

$$\Delta B_b(k) = C_b^n(k)^T \cdot B_n(k) - C_b^n(k-1)^T \cdot B_n(k-1). \qquad (29)$$

The Direction Cosine Matrix $C_b^n(k)$ can be rewritten as its propagation from the previous value (eq. 3), therefore the relationship will be:

$$\Delta B_b(k) = (C_b^n(k-1) \cdot e^{\Omega_{nb}^b(k)\cdot\Delta t})^T \cdot B_n(k)$$

$$- C_b^n(k-1)^T \cdot B_n(k-1)$$

$$= e^{-\Omega_{nb}^b(k)\cdot\Delta t} \cdot C_b^n(k-1)^T \cdot B_n(k)$$

$$- C_b^n(k-1)^T \cdot B_n(k-1). \qquad (30)$$

The magnetic field in the navigation frame during the moment *k* can be written as $B_n(k) = B_n(k-1) + \varepsilon_B$, where $\varepsilon_B$ is the change in the magnetic disturbance. Therefore, equation 30 can be rewritten as:

$$\Delta B_b(k) = e^{-\Omega_{nb}^{b}(k)\cdot\Delta t} \cdot C_b^n(k-1)^T \cdot (B_n(k-1)+\varepsilon_B)$$

$$- C_b^n(k-1)^T \cdot B_n(k-1)$$

$$= (e^{-\Omega_{nb}^{b}(k)\cdot\Delta t} - I)\cdot C_b^n(k-1)^T \cdot B_n(k-1)$$

$$+ e^{-\Omega_{nb}^{b}(k)\cdot\Delta t} \cdot C_b^n(k-1)^T \cdot \varepsilon_B. \tag{31}$$

Using the fact that $C_b^n(k-1)^T \cdot B_n(k-1) = B_b(k-1)$ and

$e^{-\Omega_{nb}^{b}(k)\cdot\Delta t} \cdot C_b^n(k-1)^T = (C_b^n(k-1)\cdot e^{\Omega_{nb}^{b}(k)\cdot\Delta t})^T = C_b^n(k)^T$, the change in the sensor magnetic field will be:

$$\Delta B_b(k) = (e^{-\Omega_{nb}^{b}(k)\cdot\Delta t} - I)\cdot B_b(k-1) + C_b^n(k)^T \cdot \varepsilon_B. \tag{32}$$

This equation relates the change in the measured magnetic field $\Delta B_b(k)$ with the turn rates $\omega(k)$ (implicit in $\Omega_{nb}^{b}(k)$).

If the foot is on a stance phase, any position dependant perturbation will be constant and we can assume that $\varepsilon_B$ will be caused only by the random noise of the Magnetometer. We propose the use of the UKF represented in Fig. 3 and the expression from equation 5 for $e^{-\Omega_{nb}^{b}(k)\cdot\Delta t}$, discarding $\varepsilon_B$ to propagate the attitude and estimate the Gyroscope bias. Combining equation 5 and equation 32 results in:

$$\Delta B_b(k) = \left( \frac{(1-\cos(\|\omega(k)\Delta T\|))}{\|\omega(k)\|^2} \Omega_{nb}^b(k)^2 \right.$$

$$\left. - \frac{\sin(\|\omega(k)\Delta T\|)}{\|\omega(k)\|} \Omega_{nb}^b(k) \right) \cdot B_b(k-1)$$

$$\tag{33}$$

where $\omega(k)$ represents the turn rate after eliminating the bias, $\omega(k) = Gyr(k) - \Delta\omega(k)$. The measurement $y(k)$ and the observation function $Y(k) = h(k)$ are:

$$y(k) = B_b(k) - B_b(k-1) \tag{34}$$

$$Y(k) = \left( \frac{(1 - \cos(\|\omega(k)\Delta T\|))}{\|\omega(k)\|^2} \Omega_{nb}^{b}(k)^2 \right.$$

$$\left. - \frac{\sin(\|\omega(k)\Delta T\|)}{\|\omega(k)\|} \Omega_{nb}^{b}(k) \right) \cdot B_b(k-1).$$

$$(35)$$

As a way to avoid the changes in the magnetic disturbances we propose to limit the norm of the change in the magnetic field $\|\Delta_{B_b}\|$ to the arc formed by the vector $B_b$ when the turn rate is perpendicular to it. Using the threshold $\gamma_\omega$ for the turn rate during the time interval $\Delta t$, the limit $\gamma_B$ for the change in the magnetic field will be:

$$\gamma_B = \gamma_\omega \cdot \Delta t \cdot B_b(k-1). \qquad (36)$$

Adding this to the stance assumption, the condition $T_{mr}$ to use the MARU measurement with magnetic rotations will be:

$$T_{mr}(Acc, Gyr, \Delta B_b(k))_k = (\|Acc\| < \gamma_a) \& (\|Gyr\| < \gamma_\omega)$$

$$\& (\|\Delta B_b(k)\| < \gamma_B). \qquad (37)$$

### 8.3 Magnetic rotation first order approximation

Although the UKF offers a better behavior for non-linear systems it might be necessary to implement an EKF. In this case we are going to propose a linearized form of equation 32. The first order approximation of $e^{-\Omega_{nb}^{b}(k)\cdot\Delta t}$ is:

$$e^{-\Omega_{nb}^{b}(k)\cdot\Delta t} = I - \Omega_{nb}^{b}(k) \cdot \Delta t = I - [\omega(k)\Delta t \quad \times]. \qquad (38)$$

This correspond to the $\omega\Delta t \times B$ in the Fig. 4, a linear approximation of the movement of the vector $B_b$ according to the turn rate. Inserting this approximation in equation 32 we obtain:

$$\Delta B_b(k) = -[\omega(k)\Delta t \quad \times] \cdot B_b(k-1) + C_b^{n}(k)^{T} \cdot \varepsilon_B. \qquad (39)$$

Adding the effect of the bias in the Gyroscope ($\omega(k) = Gyr(k) - \Delta\omega(k)$) to the previous equation results in:

$$\Delta B_b(k) = -[(Gyr(k) - \Delta\omega(k))\Delta t \quad \times] \cdot B_b(k-1) + C_b^{n}(k)^{T} \cdot \varepsilon_B$$

$$= -[Gyr(k)\Delta t \quad \times] \cdot B_b(k-1) + C_b^{n}(k)^{T} \cdot \varepsilon_B. + [\Delta\omega(k)\Delta t \quad \times] \cdot B_b(k-1) \qquad (40)$$

Reordering the equation to represent a linear relationship between the measurement and $\Delta\omega(k)$ leads to:

$$\Delta B_b(k) + [Gyr(k)\Delta t \quad \times] \cdot B_b(k-1) =$$

$$[-B_b(k-1)\Delta t \quad \times] \cdot \Delta \omega(k) + C_b^n(k)^T \cdot \varepsilon_B. \qquad (41)$$

The measurement $m(k)$ and the observation matrix $H(k)$ (for a 15 states EKF) becomes;

$$m(k) = \Delta B_b(k) + [Gyr(k)\Delta t \quad \times] \cdot B_b(k-1) \qquad (42)$$

$$H(k) = \begin{bmatrix} I_{3x3} & [-B_b(k-1)\Delta t \quad \times] & 0_{3x9} \end{bmatrix} \qquad (43)$$

It is possible to detect the measurement using the same threshold established in equation 35 and 36. This observation matrix is the same as the one obtained in [2] and [3] but the generality of the method, the detection and the implementation differ.

### 8.4 MARU evaluation

For the evaluation of the MARU method we used the synthetic noiseless IMU signals proposed in [24] adding magnetic dipoles patterns to account for the magnetic perturbations of a normal building. We observed that magnetically aided PDR methods (using the magnetometer as a compass), as the one proposed in [8], tend to accumulate errors in the position after each turn. However, using the MARU measurements provided a more accurate reconstruction of the position.

Using the noiseless signals we propose to do a Monte Carlo evaluation of the MARU measurement, adding noise patterns to the accelerometer, gyroscope and magnetometer to generate 100 different simulations. We will base our evaluation on 2 error figures, the root mean squared position error $e_r(t)$ :

$$e_r(t) = \sqrt{\frac{1}{N} \cdot \sum_{i=1}^{N} \sum_{n=x,y,z} (r_{n,i}(t) - r_n(t))^2} \qquad (44)$$

and the root mean squared yaw error $e_\psi(t)$ :

$$e_\psi(t) = \sqrt{\frac{1}{N} \cdot \sum_{i=1}^{N} (\psi_i(t) - \psi(t))^2}. \qquad (45)$$

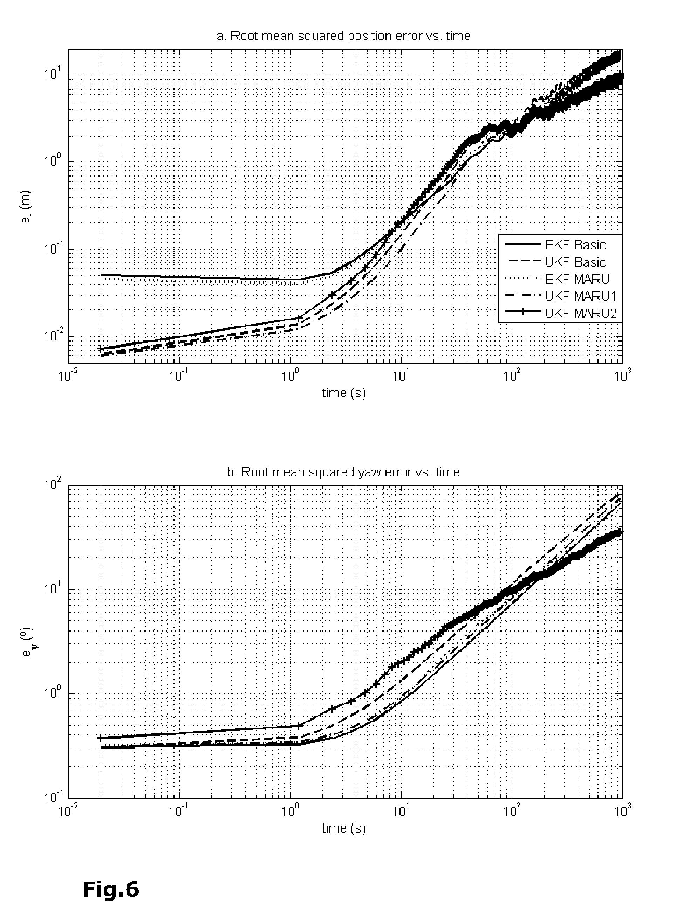

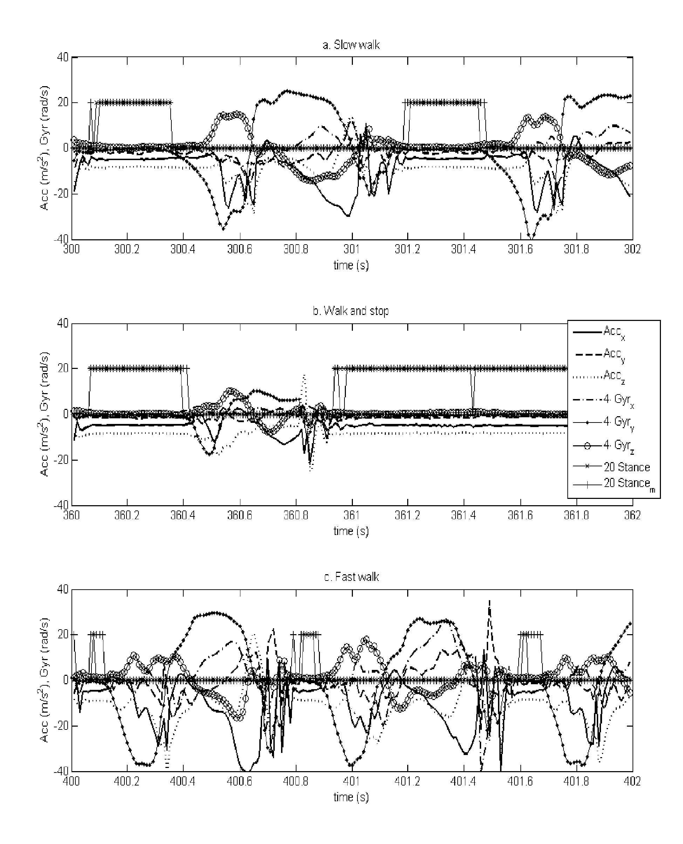

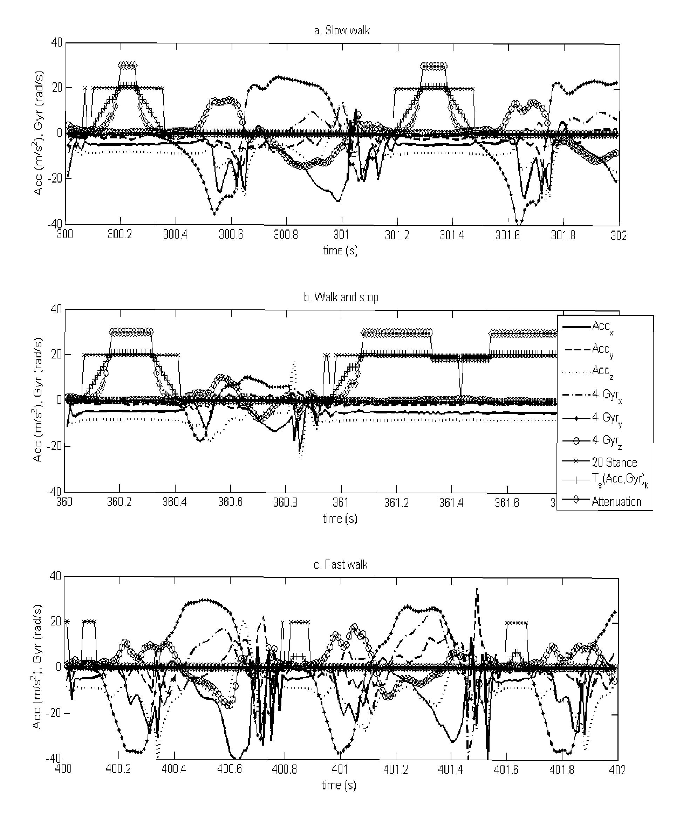

The evolution of the root mean squared errors can be observed in Fig. 6 for different filter approaches, where we can see that the MARU is able to obtain information about the gyroscope bias during the stance phases and therefore is able to lower the error trends. In the first seconds of the experiment we can observe a higher error of the yaw. This is due to the fact that we are adding noise from the new measurements, but after 100 seconds the error decreases. The method that reduces the error the most is the magnetic rotation for the UKF (line UKF MARU2 as defined in Fig. 6) due to the fact that it obtains more information about the biases during the stances. We also have observed that if a ZARU establishes a value for the biases in the gyroscope, then the MARU effect is minimal and it is observed only after several minutes.

### 9. Soft Measurements

We have observed that during a normal walk, the IMU presents slow movements phases before and after the stance. This slow movement detections can be confused with the zero velocity phase, and must be handled. Usually, the step detection algorithms discard this sub phases to avoid adding errors in the ZUPT correction. However, this reduces the amount of information that can be used for corrections and in some cases like running, the stances might not be detected. It would be beneficial to make the detection of the change between the swing and the stance phases not abrupt since it will allow the use of more measurements. Therefore we propose to establish a wider stance window with transitions at the beginning and the end to account for the pre and post stance phases.

### 9.1 Veracity of the stance

In the Fig. 7 we can observe 2 step detection algorithms with respect to the IMU signals (the gyroscope and stance detection signals was amplified for an easier view): the first (see line "20 Stance" in Fig. 7) is the retarded step detection proposed in [24] and the second (see line "20 Stance$_m$" in Fig. 7) uses only thresholds for the magnitude of the acceleration and turn rates. The last one provides more samples as information, but the information might not be as good as in the first case. It is clear that the veracity of the zero velocity assumption is zero before the pre stance, and it starts to grow until it reaches its maximal at the center of the stance phase. Then it starts to decrease until the end of the post stance phase.

We propose the generation of a veracity signal measuring the amount of step detections passed in an evaluation window with the size of the stance zone; a higher the amount of detections in the vicinity of the sample will imply a higher veracity of the detection. This will require the signal to be post processed, but we can still obtain good results using a delay of $N$ samples and therefore an evaluation window of $2N+1$ samples. We can measure the number of stance detections in the window $I(k)$ using ($T(AccGyr)_k$=1 in stance and $T(Acc,Gyr)_k$=0 in swing):

$$l(k) = \sum_{j=-N}^{N} T(Acc, Gyr)_{k+j}. \qquad (46)$$

Our new window will have $N'$ samples so $2N'+1=I(k)$. A rising (beginning of the stance) and falling (last samples of the stance) slope can be obtained with:

$$T_s(Acc, Gyr)_k = max\left( \sum_{j=-N'}^{N'} (2 \cdot T(Acc, Gyr)_{k+j} - 1), 0 \right), \qquad (47)$$

In the cases of more swing detections than stance detections $T_s(AccGyr)_k$ will be 0. An example of a step detection threshold that is used to generate the signal "Stance$_m$" in the Fig. 7 is:

$$T(Acc, Gyr)_k = (\|\|Acc_k\| - 9.8\| < \gamma_a) \& (\|Gyr_k\| < \gamma_\omega). \qquad (48)$$

The veracity signal can be observed in the line $T_s(Acc,Gyr)_k$ as defined in the Fig. 8. This signal is able to provide step detections even when the pedestrian is running, but indicates that the most important information for zero velocity updates or ZARU, MARU, etc. is available in the center of the stance. The points with a high veracity are points in which it is certain that the stance condition is true and therefore in the case of the ZUPT the velocity is closer to zero and in the case of the MARU the the magnetic field in the navigation frame is more constant. On the opposite case if the veracity is low the stance condition is not as certain and the previous conditions are not that strong.

The covariance of the estimated zero velocity or zero change of the magnetic field in the navigation frame, are referred in the covariance of the measurement ($R$ in equation 13), therefore the value of $R$ must be related with the veracity. To associate the veracity with the covariance of the measurement, we tried several functions (lineal, inverse, exponential, etc.) and the best results for the resulting covariance of the measurement $R(k)$ were obtained with:

$$R(k) = 10^{\frac{T_{s,max} - T_s(Acc,Gyr)_k}{m_s \cdot T_{s,max}}} \cdot R_0, \qquad (49)$$

where $T_{s,max}$ is the maximal value of $T_s(Acc,Gyr)_k$, $m_s$ represents an attenuation factor for low veracities and $R_0$ is the covariance of the measurement when the veracity is maximum. In Fig. 8 we can observe in black a proposed exponential attenuation function to apply to the covariance of a measurement. The same conditions of Fig. 7 were used to generate Fig. 8.

### 9.2 Evaluation of the soft measurements

For the evaluation of the soft measurements we used the data set 16 of [25]. The data was recorded from an IMU placed in the instep of the right foot, while doing a 5 minutes closed loop running/walking trajectory without a long stance before the first movement. The ground truth was recorded with a camera motion system and we tested the EKF and the UKF (with their respective versions of MARU) with and without the soft measurements.

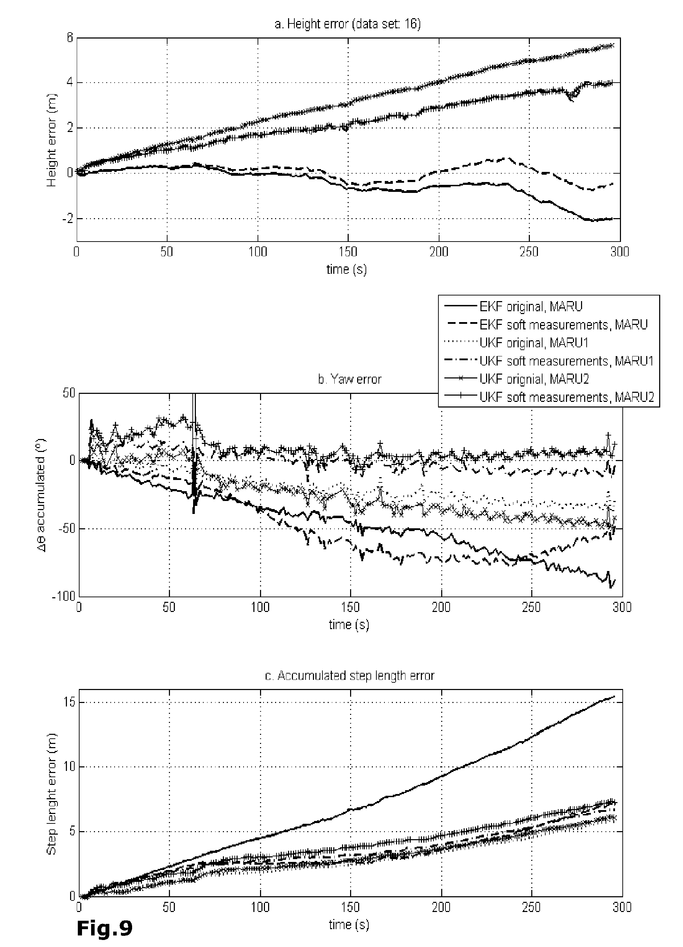

From Fig. 9, we can see that the soft measurements applied in the covariances of the ZUPT and MARU, decreased the errors in most cases. This is because it uses more measurement samples per step and therefore it obtains more information. In this example the best results are obtained using the UKF with MARU1 (change in the magnetic heading) and soft measurements.

### 10. Performance Analysis

For the evaluation of the introduced approaches we propose 2 trajectories, both are recorder using the MTx IMU from XSens mounted in the instep of the right foot. The first experiment is recorded walking in the first floor of an office building. The floor is covered with carpet and the user is standing 9 seconds before starting the movement, in order to generate a ZARU measurement and estimate the gyroscope biases. The trajectory starts in a rectangular corridor, walking East, then it follows the corridor of the building counterclockwise, entering in some of the offices and ending in the South East office. The experiment lasted 5 minutes.

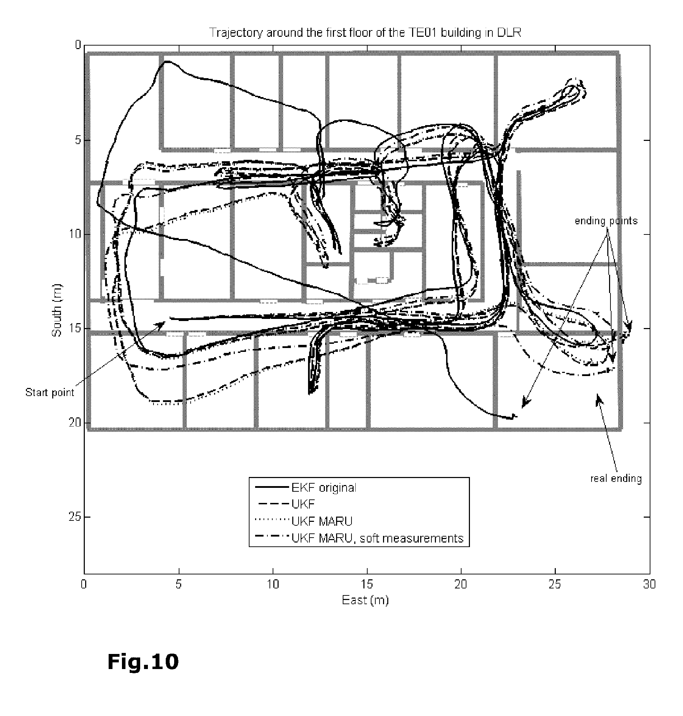

In Fig. 10, we can see the estimation of the trajectories obtained after using several PDR methods. We can observe that the UKF reduces the errors in the estimation of the orientation compared to the EKF. Adding the MARU does not affect significantly the estimation because of the initial ZARU. The UKF with MARU (using magnetic rotation) and soft measurements provides the best estimate of the position. We assume that it is due to the soft measurements of the ZUPT which improves the behavior of the zero velocity update in the carpet and provides more information to the MARU.

The second experiment consists of a closed loop trajectory in a different office building. The user is standing 10 seconds before starting the movement in order to generate a ZARU measurement and estimate the gyroscope biases. The trajectory starts entering the building and follows a counterclockwise path passing through some of the offices. After the first round in the building, the subject exits the building and follows a rectangular path in the parking lot. Finally the first round is repeated and the user ends in the same starting point. The trajectory lasted 10 minutes.

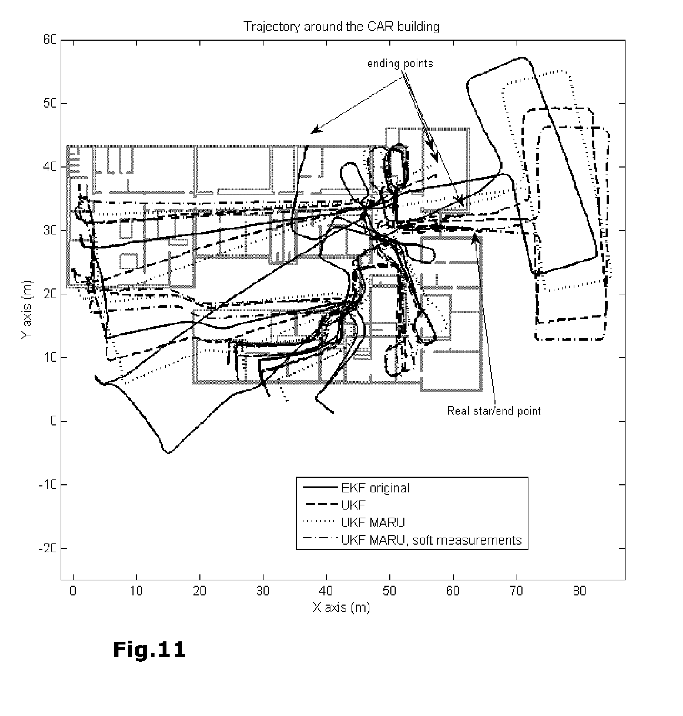

In Fig. 11, we can see the estimation of the trajectories after using several PDR methods. We can observe that the UKF reduces the errors associated with the loss of the heading. The introduction of the MARU measurements generate an initial loss of the heading, mainly due to the introduction of the magnetometer errors. However, after some time the orientation is maintained in a better way, although the initial errors is still present. If the trajectory lasted longer we would see a constant error in this case. By adding the soft measurements, we are able to estimate the errors in the system faster, and correctly propagate the orientation.

We can observe that the UKF provides better results than the EKF, however with the UKF we observed higher estimation times. As a way to measure the computational load required for using the proposed methods, we compared the algorithms execution times using MATLAB implementations in a 3.2 GHz Pentium 4, 4 GB RAM PC using Windows XP. We avoided running other programs during the test. We used the following 3 datasets with 100 Hz sampling rate:

- Data set 14 of [25]: a 280.61 seconds walking scenario.
- Data set 17, recorded using the technique proposed in [25]: a 657.04 seconds walking/running scenario.
- Synthetic signal: a 981.60 seconds simulation of walking in a closed path.

In table 1, we list the computation times and the percentage of the signal time required for the methods implemented in this work. It is clear that even if the UKF provides a more accurate estimations, it needs more computation time than other methods. This is mainly due to the multiple propagations needed to measure the evolution of the "sigma" points. This disadvantage however might be compensated by the advances in parallel computing that have taken place. The usage of MARU or soft measurements only represent around 10 % additional computing load.

Table 1: Computing time (in seconds) and their respective % of the signal time for different estimation methods for 3 test signals. MARU refers to the magnetic rotation and "s" to the use of soft measurements in ZUPT and MARU.

| Used filter | Data set 14 | | Data set 17 | | Synthetic | |
|---|---|---|---|---|---|---|
| | time | % | time | % | time | % |
| EKF | 13.49 | 4.81 | 32.12 | 4.88 | 47.55 | 4.84 |
| EKF MARU | 14.07 | 5.01 | 35.35 | 5.38 | 50.06 | 5.10 |
| EKF MARU s | 16.48 | 5.87 | 38.36 | 5.84 | 59.16 | 6.03 |
| UKF | 121.45 | 43.29 | 304.54 | 46.35 | 445.83 | 45.41 |
| UKF MARU | 44.31 | 51.43 | 337.13 | 51.31 | 486.94 | 49.61 |
| UKF MARU s | 41.13 | 50.29 | 321.57 | 48.94 | 474.08 | 48.30 |

## 11. Conclusions

We have presented a new implementation of Pedestrian Dead-Reckoning using the Unscented Kalman Filter instead of the widely used Extended Kalman Filter. The new filter adapts better to the non-linearities of the orientation propagation which allows for better estimations of the position and orientation at the cost of increasing the computation time. The UKF filter also allows the usage of non-linear measurements without the need of linear approximations as in the EKF.

We also presented three turn rate biases estimation methods based on the measured changes in the magnetic field during the stance. These methods improve the estimation, especially when there is no initial long stance phase. Those methods can be used indoors even in the presence of strong position dependant perturbations due to the fact that they use the points where the magnetic perturbations are constant.

Finally, we presented a method to treat the changes between the detections of the stance and the swing, gradually allowing the covariance of the measurements to be adapted according to the veracity of the stance detection. This method also allows the detection of different walking speeds and adapts the covariance of the measurement accordingly.

The previous methods improves the basic PDR algorithm and allow high level fusion algorithms to work better.

## 12. Abstract

The Extended Kalman Filter (EKF) has been the state of the art in Pedestrian Dead-Reckoning for foot-mounted Inertial Measurements Units. However due to the non-linearity in the propagation of the orientation the EKF is not the optimal Bayesian filter. We propose the usage of the Unscented Kalman Filter (UKF) as the integration algorithm for the inertial measurements. The UKF improves the mean and covariance propagation needed for the Kalman filter. Although the UKF provides a better estimate of the orientation, with Zero velocity UPdaTes (ZUPT) measurements, the yaw and the bias in the gyroscope associated with it becomes unobserved and might generate errors in the positioning. We studied the changes in the magnetic field during the stance phase and their relationship with the turn rates to propose three measurements using the magnetometer signal that will be called Magnetic Angular Rate Updates (MARUs). The first measurement uses the change in the angle of the magnetic field in the horizontal plane to measure the change in the yaw and provides a simple measurement for the UKF implementation. The second measurement relates the change in the magnetic field vector to the turn rate and provides information on the bias of the gyroscope for an UKF. The last measurement uses a first order approximation to generate a linear relationship with the gyroscope bias and therefore it can be used in an EKF. Finally we proposed a metric for the reliability of the stance as a way to use the pre and post stance information but adjusting the covariance of the measurements gradually from swing to stance. These methods were tested on real and simulated signals and they have shown improvements over the original PDR algorithms.

## References

[1] Afzal, M.H. and Renaudin, V. and Lachapelle, G., "Magnetic field based heading estimation for pedestrian navigation environments", Indoor Positioning and Indoor Navigation (IPIN), 2011 International Conference on, pages 1 -10, 2011.

[2] Muhammad Haris Afzal., Use of Earth's Magnetic Field for Pedestrian Navigation, PhD thesis, University of Calgary, 2011.

[3] Afzal, Muhammad Haris and Renaudin, Valérie and Lachapelle, Gérard., "Use of Earth's Magnetic Field for Mitigating Gyroscope Errors Regardless of Magnetic Perturbation", Sensors, 11(12):11390--11414, 2011.

[4] Ascher, C. and Zwirello, L. and Zwick, T. and Trommer, G., "Integrity monitoring for UWB/INS tightly coupled pedestrian indoor scenarios.", Indoor Positioning and Indoor Navigation (IPIN), 2011 International Conference on, pages 1 -6, 2011.

[5] Bruno, L. and Robertson, P., "WiSLAM: Improving FootSLAM with WiFi", Indoor Positioning and Indoor Navigation (IPIN), 2011 International Conference on, pages 1 - 10, 2011.

[6] Foxlin, Eric., "Pedestrian tracking with shoe-mounted inertial sensors", IEEE Computer Graphics and Applications, (December):38--46, 2005.

[7] Haykin, Simon S., Kalman filtering and neural networks, Wiley, 2001.

[8] Jimenez, A.R. and Seco, F. and Prieto, J.C. and Guevara, J., "Indoor Pedestrian Navigation using an INS/EKF framework for Yaw Drift Reduction and a Foot-mounted IMU", WPNC 2010: 7th Workshop on Positioning, Navigation and Communication, vol. 10, 2010.

[9] Jimenez Ruiz, A.R. and Seco Granja, F. and Prieto Honorato, J.C. and Guevara Rosas, J.I., "Accurate Pedestrian Indoor Navigation by Tightly Coupling Foot-Mounted IMU and RFID Measurements", Instrumentation and Measurement, IEEE Transactions on, 61(1):178 - 189, 2012.

[10] Kaiser, S. and Khider, M. and Robertson, P., "A maps-based angular PDF for navigation systems in indoor and outdoor environments", Indoor Positioning and Indoor Navigation (IPIN), 2011 International Conference on, pages 1 -7, 2011.

[11] Kessler, Christoph and Ascher, Christian and Frietsch, Natalie and Weinmann, Michael and Trommer, Gert F., "Vision-based attitude estimation for indoor navigation using Vanishing Points and lines", Position Location and Navigation Symposium (PLANS), 2010 IEEE/ION, pages 310-318, 2010.

[12] Ladetto, Quentin and Seeters, J Van and Sokolowski, S and Sagan, Z and Merminod, Bertrand., "Digital Magnetic Compass and Gyroscope for Dismounted Soldier Position and Navigation", Sensors & Electronics Technology Panel, NATO Research and Technology Agency Sensors, :1--15, 2002.

[13] Titterton, D. and Weston, J., Strapdown Inertial Navigation Technology, 2004.

[14] Wan, E.A and Van Der Merwe, R., The unscented Kalman filter for nonlinear estimation, pages 153 - 158, 2000.

[15] Farrell, Jay A. and Barth, Matthew, The global positioning system and inertial navigation, McGraw-Hill, 1999.

[16] Ladetto, Quentin and Gabaglio, Vincent and Merminod, Bertrand and Ag, Leica, "Two Different Approaches for Augmented GPS Pedestrian Navigation", International Symposium on Location Based Services for Cellular Users, Locellus 2001, pages 1--7, 2001.

[17] Rajagopal, Sujatha., Personal dead reckoning system with shoe mounted inertial sensors,. PhD thesis, 2008.

[18] Krach, Bernhard and Robertson, Patrick, "Integration of foot-mounted inertial sensors into a Bayesian location estimation framework", 2008 5th Workshop on Positioning, Navigation and Communication, 2008(2):55--61, 2008.

[19] Jimenez, A.R. and Seco, F. and Prieto, J.C. and Guevara, J., "A comparison of Pedestrian Dead-Reckoning algorithms using a low-cost MEMS IMU", 2009 IEEE International Symposium on Intelligent Signal Processing, pages 37--42, 2009. Ieee.

[20] Simon J. Julier and Jeffrey K. Uhlmann, A New Extension of the Kalman Filter to Nonlinear Systems, pages 182--193, 1997.

[21] Stirling, Ross, Development of a Pedestrian Navigation System Using Shoe Mounted Sensors, Master's thesis, University of Alberta, 2004.

[22] Ojeda, Lauro and Borenstein, Johann, "Non-GPS navigation with the personal dead-reckoning system", SPIE Defense and Security Conference, Unmanned Systems Technology IX, Orlando, Florida, April 9-13, 2007, pages 65610C--65610C--11, 2007. Spie.

[23] Skog, 1. and Handel, P. and Nilsson, J.O. and Rantakokko, J., "Zero-Velocity Detection - An Algorithm Evaluation", Biomedical Engineering, IEEE Transactions on, 57(11):2657 -2666, 2010.

[24] Zampella, F. J. and Jimnez, A. R. and Seco, F. and Prieto, J. C. and Guevara, J. 1., "Simulation of Foot-Mounted IMU Signals for the Evaluation of PDR Algorithms", International Conference on Indoor Positioning and Indoor Navigation (IPIN), 2011.1

[25] Angermann, Michael and Robertson, Patrick and Kemptner, Thomas and Khider, Mohammed, "A High Precision Reference Data Set for Pedestrian Navigation using Foot-Mounted Inertial Sensors", 2010 International Conference on Indoor Positioning and Indoor Navigation (IPIN), 15-17 September 2010, Zürich, Switzerland, number September, pages 6, 2010.

**Claims**

1. Method for estimating the position and orientation using an inertial measurement unit fixed to a moving pedestrian, in particular to a leg, a knee, a foot, or an arm of a pedestrian, for detecting movement of the pedestrian within an observation area in particular not being covered by GNSS-signals as e.g. in buildings, comprising the following steps assuming a known sensor alignment on the pedestrian:

   - receiving measurements values from the inertial measurement unit and determining the orientation of the pedestrian within the observation area,
   - providing a magnetic field sensor fixed to the pedestrian, for sensing at least the direction of the local magnetic field at the respective site within the observation area where the pedestrian currently is present,
   - determining the orientation of the pedestrian within the observation area based on the direction of the local magnetic field sensed by the magnetic field sensor, and
   - adjusting orientation estimated by the inertial measurement unit in accordance with the information obtained from the discrepancies between the change in orientation provided by the inertial measurement unit and the change in orientation of the pedestrian observed from the local magnetic field, sensed by the magnetic field sensor.

2. The method according to claim 1, wherein a time interval or a limited region is identified within which the sensed direction of the local magnetic field is substantially left unchanged, and wherein, for the time interval or the limited region, the potential change in orientation of the pedestrian is determined based on the direction of the local magnetic field sensed by the magnetic field sensor and wherein orientation estimated by the inertial measurement unit is adjusted in accordance with the discrepancies in the perceived orientation of the pedestrian determined based on the difference between the change in the direction of the local magnetic field sensed by the magnetic field sensor and the change in orientation sensed by the inertial measurement unit.

3. The method according to claim 1 or 2, wherein the magnetic field sensor and the inertial measurement unit provide a pseudo measurement inputted into a Kalman filter also receiving the measurement values of the inertial measurement unit, and wherein the Kalman filter outputs the respective current orientation of the pedestrian within the observation area.

4. The method according to any one of claims 1 to 3, wherein, the limited time interval is the stance phase for an inertial measurement unit that is located on the foot.

5. The method according to any one of claims 1 to 3, wherein, the limited time interval is during the swing phase for an inertial measurement unit that is located on the foot.

6. The method according to any one of claims 1 to 5, wherein the magnetic field sensor measures the vector of the local magnetic field, i.e. the direction of the local magnetic field at least in the horizontal projection and/or the strength of the local magnetic field.

7. The method according to any one of claims 1 to 6, wherein the inertial measurement unit comprises at least a 3-axis gyroscope or other turn rate sensor and a 3-axis accelerometer, wherein the orientation estimated by the at least one turn rate sensor is adjusted in accordance with the information obtained from the discrepancies between the change in orientation provided by the at least one turn rate sensor and the change in orientation of the pedestrian observed from the local magnetic field, sensed by the magnetic field sensor.

8. Use of the method according to any one of the preceding claims in a method for localizing a pedestrian within the observation area based on the outputs of the inertial measurement unit.

EP 2 657 647 A1

**Fig.1**

**Fig.2**

27

**Fig.3**

Fig.4

**Fig.5**

a. Root mean squared position error vs. time

b. Root mean squared yaw error vs. time

Fig.6

a. Slow walk

b. Walk and stop

c. Fast walk

a. Slow walk

b. Walk and stop

c. Fast walk

a. Height error (data set: 16)

b. Yaw error

c. Accumulated step length error

Legend:
— EKF original, MARU
- - - EKF soft measurements, MARU
······· UKF original, MARU1
- · - · UKF soft measurements, MARU1
—×— UKF orignial, MARU2
—+— UKF soft measurements, MARU2

**Fig.9**

Fig.10

Trajectory around the CAR building

Fig.11

Europäisches
Patentamt

European
Patent Office

Office européen
des brevets

**EUROPEAN SEARCH REPORT**

Application Number

EP 12 16 5120

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | MUHAMMAD HARIS AFZAL ET AL: "Use of Earth's Magnetic Field for Mitigating Gyroscope Errors Regardless of Magnetic Perturbation", SENSORS, vol. 11, no. 12, 1 January 2011 (2011-01-01), pages 11390-11414, XP55037863, ISSN: 1424-8220, DOI: 10.3390/s111211390 * abstract * * page 11391 - page 11393 * * page 11395 * * page 11398 - page 11402 * ----- | 1-8 | INV. G01C17/28 G01C21/16 G01C21/20 |
| A,D | JIMENEZ A R ET AL: "Indoor pedestrian navigation using an INS/EKF framework for yaw drift reduction and a foot-mounted IMU", POSITIONING NAVIGATION AND COMMUNICATION (WPNC), 2010 7TH WORKSHOP ON, IEEE, PISCATAWAY, NJ, USA, 11 March 2010 (2010-03-11), pages 135-143, XP031811025, ISBN: 978-1-4244-7158-4 * the whole document * ----- | 1-8 | |
| A,D | AFZAL, M.H.; RENAUDIN, V.; LACHAPELLE, G.: "Magnetic field based heading estimation for pedestrian navigation environments", INDOOR POSITIONING AND INDOOR NAVIGATION (IPIN), 2011 INTERNATIONAL CONFERENCE ON, 2011, pages 1-10, XP002683311, * the whole document * ----- | 1-8 | TECHNICAL FIELDS SEARCHED (IPC) G01C |

The present search report has been drawn up for all claims

| Place of search | Date of completion of the search | Examiner |
|---|---|---|
| The Hague | 13 September 2012 | Faivre, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **AFZAL, M.H. ; RENAUDIN, V. ; LACHAPELLE, G.** Magnetic field based heading estimation for pedestrian navigation environments. *Indoor Positioning and Indoor Navigation (IPIN), 2011 International Conference,* 2011, 1-10
- **MUHAMMAD HARIS AFZAL.** Use of Earth's Magnetic Field for Pedestrian Navigation. *PhD thesis,* 2011
- **AFZAL, MUHAMMAD HARIS ; RENAUDIN, VALÉRIE ; LACHAPELLE, GÉRARD.** Use of Earth's Magnetic Field for Mitigating Gyroscope Errors Regardless of Magnetic Perturbation. *Sensors,* 2011, vol. 11 (12), 11390-11414
- **ASCHER, C. ; ZWIRELLO, L. ; ZWICK, T. ; TROMMER, G.** Integrity monitoring for UWB/INS tightly coupled pedestrian indoor scenarios. *Indoor Positioning and Indoor Navigation (IPIN), 2011 International Conference,* 2011, 1-6
- **BRUNO, L. ; ROBERTSON, P.** WiSLAM: Improving FootSLAM with WiFi. *Indoor Positioning and Indoor Navigation (IPIN), 2011 International Conference,* 2011, 1-10
- **FOXLIN, ERIC.** Pedestrian tracking with shoe-mounted inertial sensors. *IEEE Computer Graphics and Applications,* December 2005, 38-46
- **HAYKIN, SIMON S.** Kalman filtering and neural networks. Wiley, 2001
- **JIMENEZ, A.R. ; SECO, F. ; PRIETO, J.C. ; GUEVARA, J.** Indoor Pedestrian Navigation using an INS/EKF framework for Yaw Drift Reduction and a Foot-mounted IMU. *WPNC 2010: 7th Workshop on Positioning, Navigation and Communication,* 2010, vol. 10
- **JIMENEZ RUIZ, A.R. ; SECO GRANJA, F. ; PRIETO HONORATO, J.C. ; GUEVARA ROSAS, J.I.** Accurate Pedestrian Indoor Navigation by Tightly Coupling Foot-Mounted IMU and RFID Measurements. *Instrumentation and Measurement, IEEE Transactions,* 2012, vol. 61 (1), 178-189
- **KAISER, S. ; KHIDER, M. ; ROBERTSON, P.** A maps-based angular PDF for navigation systems in indoor and outdoor environments. *Indoor Positioning and Indoor Navigation (IPIN), 2011 International Conference,* 2011, 1-7
- **KESSLER, CHRISTOPH ; ASCHER, CHRISTIAN ; FRIETSCH, NATALIE ; WEINMANN, MICHAEL ; TROMMER, GERT F.** Vision-based attitude estimation for indoor navigation using Vanishing Points and lines. *Position Location and Navigation Symposium (PLANS),* 2010, 310-318
- **LADETTO, QUENTIN ; SEETERS, J VAN ; SOKOLOWSKI, S ; SAGAN, Z ; MERMINOD, BERTRAND.** Digital Magnetic Compass and Gyroscope for Dismounted Soldier Position and Navigation. *Sensors & Electronics Technology Panel, NATO Research and Technology Agency Sensors,* 2002, 1-15
- **TITTERTON, D. ; WESTON, J.** *Strapdown Inertial Navigation Technology,* 2004
- **WAN, E.A ; VAN DER MERWE, R.** *The unscented Kalman filter for nonlinear estimation,* 2000, 153-158
- **FARRELL, JAY A. ; BARTH, MATTHEW.** The global positioning system and inertial navigation. McGraw-Hill, 1999
- **LADETTO, QUENTIN ; GABAGLIO, VINCENT ; MERMINOD, BERTRAND ; AG, LEICA.** Two Different Approaches for Augmented GPS Pedestrian Navigation. *International Symposium on Location Based Services for Cellular Users, Locellus,* 2001, 1-7
- **RAJAGOPAL, SUJATHA.** Personal dead reckoning system with shoe mounted inertial sensors. *PhD thesis,* 2008
- **KRACH, BERNHARD ; ROBERTSON, PATRICK.** Integration of foot-mounted inertial sensors into a Bayesian location estimation framework. *5th Workshop on Positioning, Navigation and Communication,* 2008, 55-61
- **JIMENEZ, A.R. ; SECO, F. ; PRIETO, J.C. ; GUEVARA, J.** A comparison of Pedestrian Dead-Reckoning algorithms using a low-cost MEMS IMU. *IEEE International Symposium on Intelligent Signal Processing,* 2009, 37-42
- **SIMON J. JULIER ; JEFFREY K.** *Uhlmann, A New Extension of the Kalman Filter to Nonlinear Systems,* 1997, 182-193
- **STIRLING, ROSS.** Development of a Pedestrian Navigation System Using Shoe Mounted Sensors. *Master's thesis,* 2004

- **OJEDA, LAURO ; BORENSTEIN, JOHANN.** Non-GPS navigation with the personal dead-reckoning system. *SPIE Defense and Security Conference, Unmanned Systems Technology IX, Orlando, Florida,* 09 April 2007, 65610C-65610C11
- **SKOG, 1. ; HANDEL, P. ; NILSSON, J.O. ; RANTA-KOKKO, J.** Zero-Velocity Detection - An Algorithm Evaluation. *Biomedical Engineering, IEEE Transactions,* 2010, vol. 57 (11), 2657-2666
- **ZAMPELLA, F. J. ; JIMNEZ, A. R. ; SECO, F. ; PRIETO, J. C. ; GUEVARA, J. 1.** Simulation of Foot-Mounted IMU Signals for the Evaluation of PDR Algorithms. *International Conference on Indoor Positioning and Indoor Navigation,* 2011
- **ANGERMANN, MICHAEL ; ROBERTSON, PATRICK ; KEMPTNER, THOMAS ; KHIDER, MOHAMMED.** A High Precision Reference Data Set for Pedestrian Navigation using Foot-Mounted Inertial Sensors. *2010 International Conference on Indoor Positioning and Indoor Navigation (IPIN),* 15 September 2010, 6